# EUROPEAN PATENT SPECIFICATION

(11) **EP 4 571 740 B1**
(45) Date of publication and mention of the grant of the patent: **05.08.2026**
(21) Application number: 24217541.2
(22) Date of filing: 04.12.2024
(51) Int. Cl.: G10L 21/0208, G10L 25/30, G10L 21/0232, G06N 3/045

(54) **AUDIO-VISUAL SPEECH ENHANCEMENT**
AUDIOVISUELLE SPRACHVERBESSERUNG
AMÉLIORATION DE LA PAROLE AUDIOVISUELLE

(30) Priority: 15.12.2023 US 202318541088
(43) Date of publication of application: 18.06.2025
(73) Proprietor: Amazon Technologies, Inc., Seattle, WA 98108-1226 (US)
(72) Inventor: Chhetri, Amit Singh, Sunnyvale, 98109-5210 (US); Kamath Koteshwara, Krishna, San Jose, 98109-5210 (US); Wang, Rui, Seattle, 98109-5210 (US)
(74) Representative: Beck Greener LLP

(56) References cited:
- WANG FEIXIANG ET AL: "Cooperative Dual Attention for Audio-Visual Speech Enhancement with Facial Cues", 24 November 2023 (2023-11-24), XP093242548, Retrieved from the Internet <URL:https://arxiv.org/pdf/2311.14275>
- MICHELSANTI DANIEL ET AL: "An Overview of Deep-Learning-Based Audio-Visual Speech Enhancement and Separation", ARXIV:1806.04885V2,, vol. 29, 17 March 2021 (2021-03-17), pages 1368 - 1396, XP011850758, DOI: 10.1109/TASLP.2021.3066303
- EPHRAT ARIEL ET AL: "Looking to listen at the cocktail party", ACM TRANSACTIONS ON GRAPHICS, ACM, NY, US, vol. 37, no. 4, 30 July 2018 (2018-07-30), pages 1 - 11, XP058909305, ISSN: 0730-0301, DOI: 10.1145/3197517.3201357

## Description

With the advancement of technology, the use and popularity of electronic devices has increased considerably. Electronic devices are commonly used to capture and process audio data.

The invention is defined by the appended independent claims. Preferred embodiments of the invention are set out in the appended dependent claims.

For a more complete understanding of the present disclosure, reference is now made to the following description taken in conjunction with the accompanying drawings, in which:
FIG. 1 illustrates a system configured to perform audio-visual target speech enhancement within a voice processing pipeline;
FIGS. 2A-2C illustrate examples of frame indexes, tone indexes, and channel indexes;
FIGS. 3A-3B illustrate example components for performing dereverberation and noise reduction within a voice processing pipeline;
FIGS. 4A-4B illustrates examples of input signals and auxiliary information;
FIG. 5 illustrates an example of a densely connected convolutional recurrent network;
FIG. 6 illustrates an example component diagram for performing noise reduction and residual echo suppression within a voice processing pipeline;
FIG. 7 illustrates an example structure of a dense block;
FIG. 8 illustrates examples of recurrent neural network components;
FIG. 9 illustrates examples of mask data generated by the densely connected convolutional recurrent network;
FIG. 10 illustrates an example component diagram for performing background noise passthrough;
FIGS. 11A-11B illustrate example component diagrams for performing audio-visual target speech enhancement;
FIG. 12 illustrates an example of facial landmarks;
FIG. 13 illustrates examples of inputs to a video encoder network;
FIG. 14 illustrates examples of fusing features;
FIGS. 15A-15B illustrate examples of audio decoder networks;
FIG. 16 illustrates examples of multimodal training;
FIG. 17 is a block diagram conceptually illustrating example components of a system; and
FIG. 18 illustrates an example of a computer network for use with the overall system.

Electronic devices may be used to capture and process audio data. The audio data may be used for voice commands and/or may be output by loudspeakers as part of a communication session. During a communication session, loudspeakers may generate audio using playback audio data while a microphone generates local audio data. An electronic device may perform audio processing, such as acoustic echo cancellation (AEC) processing, residual echo suppression, noise reduction, and/or the like, to remove audible noise and an "echo" signal corresponding to the playback audio data from the local audio data, isolating local speech to be used for voice commands and/or the communication session. Prior art approaches for audio-visual speech enhancement are, e.g., disclosed in Wang et al: "Cooperative Dual Attention for Audio-Visual Speech Enhancement with Facial Cues", ARXIV.ORG, 24-11-2023, retrieved from https://arxiv.org/pdf/2311.14275, and in Michelsanti et al: "An Overview of Deep-Learning-Based Audio-Visual Speech Enhancement and Separation", IEEE/ACM TASLP, 17-03-2021, DOI: 10.1109/TASLP.2021.3066303.

To improve an audio quality during voice communication, devices, systems and methods are disclosed that perform audio-visual target speech enhancement during a communication session. For example, a device may include a deep neural network (DNN) configured to jointly mitigate additive noise, reverberation, and/or residual echo. The DNN may be a convolutional recurrent network with dense connectivity (CRN-DC) and may be configured to process isolated audio data and/or estimated echo data generated by an AEC component during AEC processing. In some examples, the DNN may be configured to process complex-valued spectrograms corresponding to the isolated audio data and/or estimated echo data, as well as image data. For example, to improve performance of the DNN by distinguishing desired speech (e.g., associated with a visible face) from interfering speech, the DNN is trained to process both audio data and image data, enabling the DNN to make use of audio and visual modalities to enhance a target speech signal. Thus, the DNN may include (i) audio/video encoders that generate audio/image features, (ii) a fusion network that combines the audio/image features, and (iii) audio/video decoders that generate output data. By processing these multimodal inputs, the DNN may distinguish between desired speech associated with a face represented in the image data and interfering speech.

In some examples, the DNN may also process facial landmarks extracted from the image data and/or generate multiple speech signals (e.g., if two or more faces are detected in the image data). For example, the DNN may include a single unified audio decoder configured to generate one or more speech signals, may select between multiple unified audio decoders depending on a number of faces represented in the image data, or may include multiple audio decoders configured to generate a speech signal for each face. Additionally or alternatively, the DNN may generate a speech mask and/or a noise mask, enabling the device to generate output audio data representing target speech and a variable amount of ambient noise. For example, the device may separately reconstruct the target speech (e.g., using the speech mask) and the background noise (e.g., using the noise mask), which enables the device to control the amount of ambient noise represented in the output audio data.

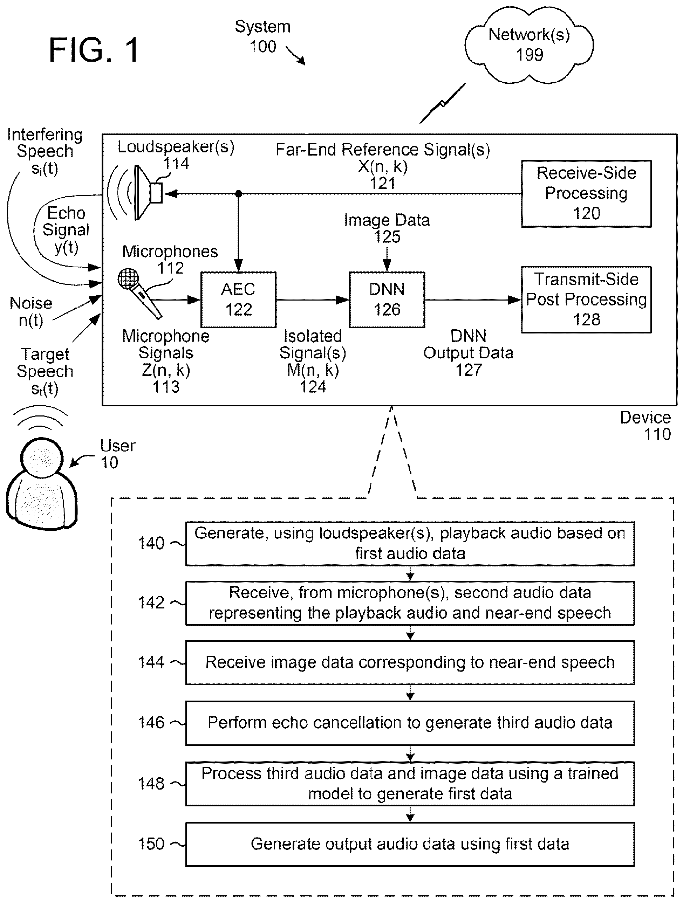

FIG. 1 illustrates a high-level conceptual block diagram of a system configured to perform audio-visual target speech enhancement within a voice processing pipeline. As illustrated in FIG. 1, the system 100 may include a device 110 that may be communicatively coupled to network(s) 199 and may include one or more microphone(s) 112 in a microphone array and/or one or more loudspeaker(s) 114. However, the disclosure is not limited thereto and the device 110 may include additional components without departing from the disclosure.

The device 110 may be an electronic device configured to send audio data to and/or receive audio data. For example, the device 110 (e.g., near-end or local device) may receive playback audio data (e.g., far-end reference audio data, represented in FIG. 1 as far-end reference signal(s) X(n, k) 121) from a remote device and the playback audio data may include remote speech originating at the remote device. During a communication session, the device 110 may generate output audio corresponding to the playback audio data using the one or more loudspeaker(s) 114. While generating the output audio, the device 110 may capture microphone audio data (e.g., input audio data, represented in FIG. 1 as microphone signals Z(n, k) 113) using the one or more microphone(s) 112. In addition to capturing desired speech (e.g., the microphone audio data includes a representation of local speech from a user 10, represented in FIG. 1 as target speech sₜ(t)), the device 110 may capture a portion of the output audio generated by the loudspeaker(s) 114 (including a portion of the remote speech), which may be referred to as an "echo" or echo signal y(t), along with additional acoustic noise n(t) (e.g., undesired speech, ambient acoustic noise in an environment around the device 110, etc.), as discussed in greater detail below.

As illustrated in FIG. 1, in some examples the device 110 may capture interfering speech sᵢ(t). For example, the interfering speech sᵢ(t) may correspond to the echo signal y(t) (e.g., remote speech), acoustic noise n(t) (e.g., playback audio generated by a television or another loudspeaker), to a second user that is located out of view of a camera of the device 110, and/or the like. Thus, the device 110 may distinguish between the target speech sₜ(t) and the interfering speech sᵢ(t) based on whether a corresponding face is represented in the image data 125. In some examples, the device 110 may distinguish between multiple faces represented in the image data 125. For example, the device 110 may generate an enhanced speech signal individually for each face detected in the image data 125. The disclosure is not limited thereto, however, and in other examples the device 110 may distinguish between desired speech, which is associated with visible faces, and undesired speech that is not. For example, the device 110 may generate a single enhanced speech signal corresponding to multiple faces represented in the image data 125, such that the multiple faces are treated as a single entity and all other speech is suppressed. Additionally or alternatively, the device 110 may select an individual face represented in the image data 125 and may generate enhanced speech corresponding only to speech associated with the selected face without departing from the disclosure.

For ease of illustration, some audio data may be referred to as a signal (e.g., audio signal), such as a far-end reference signal(s) x(t), an echo signal y(t), an echo estimate signal y'(t), microphone signals z(t), isolated signal(s) m(t) (e.g., error signal m(t)), and/or the like. However, the signals may be comprised of audio data and may be referred to as audio data (e.g., far-end reference audio data x(t), echo audio data y(t), echo estimate audio data y'(t), microphone audio data z(t), isolated audio data m(t), error audio data m(t), etc.) without departing from the disclosure.

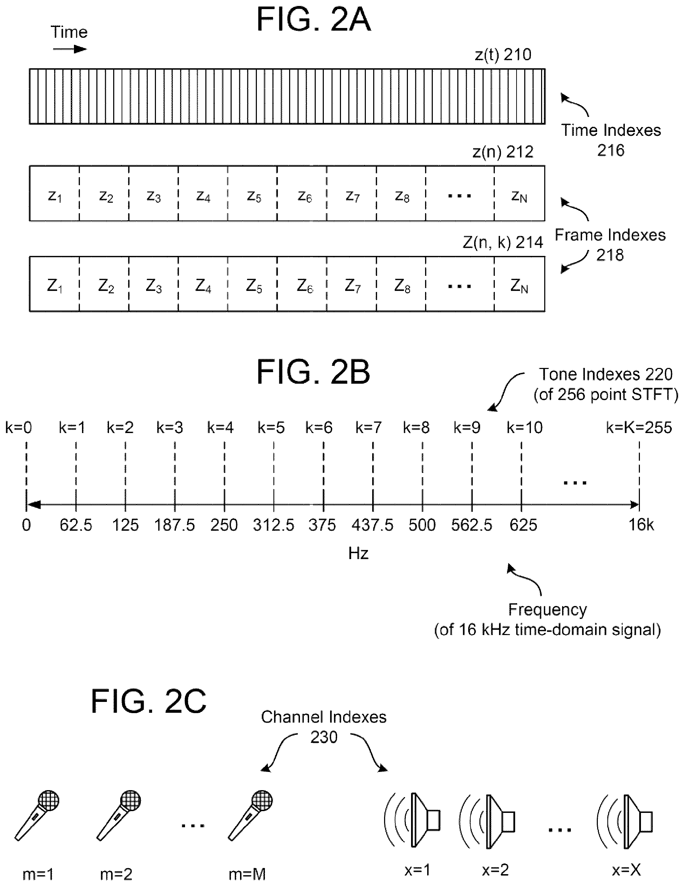

As will be described in greater detail below with regard to FIGS. 2A-2C, an audio signal may be represented in the time domain (e.g., far-end reference signal(s) x(t)) or in a frequency/subband domain (e.g., far-end reference signal(s) X(n, k)) without departing from the disclosure. In some examples, audio signals generated by microphones 112, output to the loudspeaker(S) 114, and/or sent via network(s) 199 are time domain signals (e.g., x(t)), and the device 110 converts these time domain signals to the frequency/subband domain during audio processing. For ease of illustration, however, FIG. 1 represents the far-end reference signal(s) X(n, k), the microphone signals Z(n, k), and the output signal OUT(n, k) in the frequency/subband domain.

During a communication session, the device 110 may receive far-end reference signal(s) x(t) (e.g., playback audio data) from a remote device/remote server(s) via the network(s) 199 and may generate output audio (e.g., playback audio) based on the far-end reference signal(s) x(t) using the one or more loudspeaker(s) 114. Using one or more microphone(s) 112 in the microphone array, the device 110 may capture input audio as microphone signals z(t) (e.g., near-end reference audio data, input audio data, microphone audio data, etc.), may perform audio processing to the microphone signals z(t) to generate an output signal out(t) (e.g., output audio data), and may send the output signal out(t) to the remote device/remote server(s) via the network(s) 199.

In some examples, the device 110 may send the output signal out(t) to the remote device as part of a communication session. For example, the device 110 may send the output signal out(t) to the remote device either directly or via remote server(s) and may receive the far-end reference signal(s) x(t) from the remote device either directly or via the remote server(s). However, the disclosure is not limited thereto and in other examples, the device 110 may send the output signal out(t) to the remote server(s) in order for the remote server(s) to determine a voice command. For example, during a communication session the device 110 may receive the far-end reference signal(s) x(t) from the remote device and may generate the output audio based on the far-end reference signal(s) x(t). However, the microphone signal z(t) may be separate from the communication session and may include a voice command directed to the remote server(s).

In this example, the device 110 may send the output signal out(t) to the remote server(s) and the remote server(s) may determine a voice command represented in the output signal out(t) and may perform an action corresponding to the voice command (e.g., execute a command, send an instruction to the device 110 and/or other devices to execute the command, etc.). In some examples, to determine the voice command the remote server(s) may perform Automatic Speech Recognition (ASR) processing, Natural Language Understanding (NLU) processing and/or command processing.

The voice commands may control the device 110, audio devices (e.g., play music over loudspeaker(s), capture audio using microphone(s), or the like), multimedia devices (e.g., play videos using a display, such as a television, computer, tablet or the like), smart home devices (e.g., change temperature controls, turn on/off lights, lock/unlock doors, etc.), or the like.

In audio systems, acoustic echo cancellation (AEC) processing refers to techniques that are used to recognize when a device has recaptured sound via microphone(s) after some delay that the device previously output via loudspeaker(s). The device may perform AEC processing by subtracting a delayed version of the original audio signal (e.g., far-end reference signal(s) X(n, k)) from the captured audio (e.g., microphone signal(s) Z(n, k)), producing a version of the captured audio that ideally eliminates the "echo" of the original audio signal, leaving only new audio information. For example, if someone were singing karaoke into a microphone while prerecorded music is output by a loudspeaker, AEC processing can be used to remove any of the recorded music from the audio captured by the microphone, allowing the singer's voice to be amplified and output without also reproducing a delayed "echo" of the original music. As another example, a media player that accepts voice commands via a microphone can use AEC processing to remove reproduced sounds corresponding to output media that are captured by the microphone, making it easier to process input voice commands.

The device 110 may perform audio processing to the microphone signals Z(n, k) to generate the output signal OUT(n, k). For example, the device 110 may process the microphone signal(s) Z(n, k) using a voice processing pipeline to improve an audio quality associated with the output signal OUT(n, k). As illustrated in FIG. 1, the voice processing pipeline may include an AEC component 122, a deep neural network (DNN) component 126, and transmit-side post processing component(s) 128. For example, the AEC component 122 may be configured to perform echo cancellation to isolate target speech captured by the microphone(s) 112, while the DNN component 126 may be configured to perform audio-visual target speech enhancement. As part of performing target speech enhancement, the DNN may jointly mitigate noise, residual echo, and/or dereverberation, and/or attenuate other undesired audio data (e.g., echoes and/or noise) to further enhance the target speech.

As illustrated in FIG. 1, the device 110 may receive audio data from a remote device, may process the audio data using receive-side processing components 120 to generate far-end reference signal(s) (e.g., playback audio data), and may generate playback audio (e.g., echo signal y(t)) using the loudspeaker(s) 114. While the device 110 may generate the playback audio using the far-end reference signal(s) x(t) in the time domain, for ease of illustration FIG. 1 represents the far-end reference signal(s) X(n, k) in the frequency/subband domain as the AEC component 122 performs echo cancellation in the subband domain. The far-end reference signal(s) may be referred to as far-end reference signal(s) (e.g., far-end reference audio data), playback signal(s) (e.g., playback audio data), and/or the like.

The one or more microphone(s) 112 in the microphone array may capture microphone signals (e.g., microphone audio data, near-end reference signals, input audio data, etc.), which may include the echo signal y(t) along with target speech st(t) from the user 10, interfering speech sᵢ(t), and/or noise n(t). While the device 110 may generate the microphone signals z(t) in the time domain, for ease of illustration FIG. 1 represents the microphone signals Z(n, k) in the frequency/subband domain as the AEC component 122 performs echo cancellation in the subband domain.

To isolate the local speech (e.g., target speech sₜ(t) from the user 10), the device 110 may include the AEC component 122, which may subtract a portion of the far-end reference signal(s) X(n, k) 121 from the microphone signal(s) Z(n, k) 113 and generate isolated signal(s) M(n, k) 124 (e.g., error signal(s)). As the AEC component 122 does not have access to the echo signal y(t) itself, the AEC component 122 and/or an additional component (not illustrated) may use the far-end reference signal(s) X(n, k) 121 to generate reference signal(s) (e.g., estimated echo signal(s)), which corresponds to the echo signal y(t). Thus, when the AEC component 122 removes the echo estimate data, the AEC component 122 is removing at least a portion of the echo signal y(t). Therefore, the output (e.g., isolated signal(s) M(n, k) 124) of the AEC component 122 may include the target speech sₜ(t) along with portions of the echo signal y(t) and/or the noise n(t) (e.g., difference between the reference signal(s) and the actual echo signal y(t) and noise n(t)).

Room reverberation, additive noise, and residual echo are detrimental factors that may negatively impact audio quality. For example, the user 10 of the device 110 may establish a communication session with another device, where digitized speech signals are compressed, packetized, and transmitted via the network(s) 199. One technique for establishing the communication session involves Voice over Internet Protocol (VoIP), although the disclosure is not limited thereto. During the communication session, a large amount of residual echo, reverberation, and/or additive noise is harmful to communication (e.g., reduces an audio quality), as the reverberation lowers intelligibility and makes the speech sound "far" and "hollow."

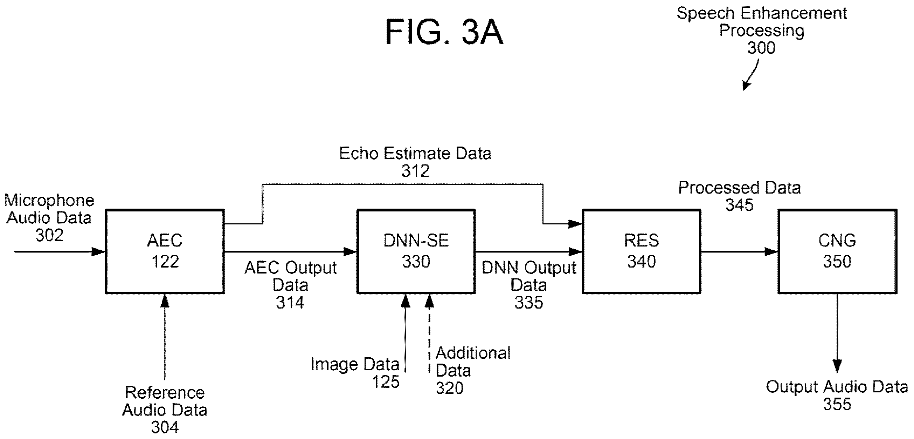

To further improve an audio quality of the output signal, the device 110 may include the DNN component 126, which may be configured to perform noise reduction, residual echo suppression, and/or dereverberation processing. For example, the DNN may process the echo estimate data and/or the isolated signals M(n, k) 124 generated by the AEC component 122 to jointly mitigate additive noise, reverberation, and residual echo, as described in greater detail below with regard to FIGS. 3A-6. Thus, the DNN component 126 may dynamically suppress unwanted audio data (e.g., the portions of the echo signal y(t) and the noise n(t) that were not removed by the AEC component 122) and generate DNN output data 127. As described in greater detail below, the DNN component 126 may be configured to process complex-valued spectrograms without departing from the disclosure.

To perform audio-visual target speech enhancement and further improve a performance of the DNN by distinguishing desired speech (e.g., associated with a visible face) from interfering speech, the DNN is trained to process both audio data and image data. To illustrate an example, processing both the audio input signals and the image data 125 enables the DNN component 126 to make use of both audio and visual modalities to determine which voice corresponds to the target speech (e.g., desirable speaker) and which voice corresponds to the interference (e.g., interfering speaker). For example, the DNN component 126 makes use of a correlation between (i) lip movement and/or facial expressions (e.g., visual component) and (ii) the audio signal (e.g., audio component) in order to enhance the target speech associated with a face represented in the image data 125 (e.g., face in front of the camera), while suppressing all other sound components represented in the microphone signal.

In some examples, the DNN may also process facial landmarks extracted from the image data and/or generate multiple speech signals (e.g., if two or more faces are detected in the image data). For example, the DNN may include a single unified audio decoder configured to generate one or more speech signals, may select between multiple unified audio decoders depending on a number of faces represented in the image data, or may include multiple audio decoders configured to generate a speech signal for each face. Additionally or alternatively, the DNN may generate a speech mask and/or a noise mask, enabling the device to generate output audio data representing target speech and a variable amount of ambient noise. For example, the device may separately reconstruct the target speech (e.g., using the speech mask) and the background noise (e.g., using the noise mask), which enables the device to control the amount of ambient noise represented in the output audio data.

As illustrated in FIG. 1, the device 110 may generate (140), using the loudspeaker(s) 114, playback audio based on first audio data (e.g., far-end reference signal(s)), may receive (142), from the microphone(s) 112, second audio data (e.g., microphone signals) representing the playback audio and near-end speech, may receive (144) image data corresponding to the near-end speech, and may perform (146) echo cancellation to generate third audio data (e.g., isolated signal(s)) and echo estimate data.

To illustrate an example, the AEC component 122 may perform AEC processing on the first microphone signal Z₁(n, k) to generate a first isolated signal M₁(n, k) associated with the first microphone 112a. For example, the AEC component 122 may generate a first echo estimate signal using a portion of the far-end reference signal(s) X(n, k), such that the first echo estimate signal approximates an echo signal corresponding to the far-end reference signal(s) that is represented in the first microphone signal. The AEC component 122 may then remove the first echo estimate signal from the first microphone signal Z₁(n, k) to generate the first isolated signal M₁(n, k).

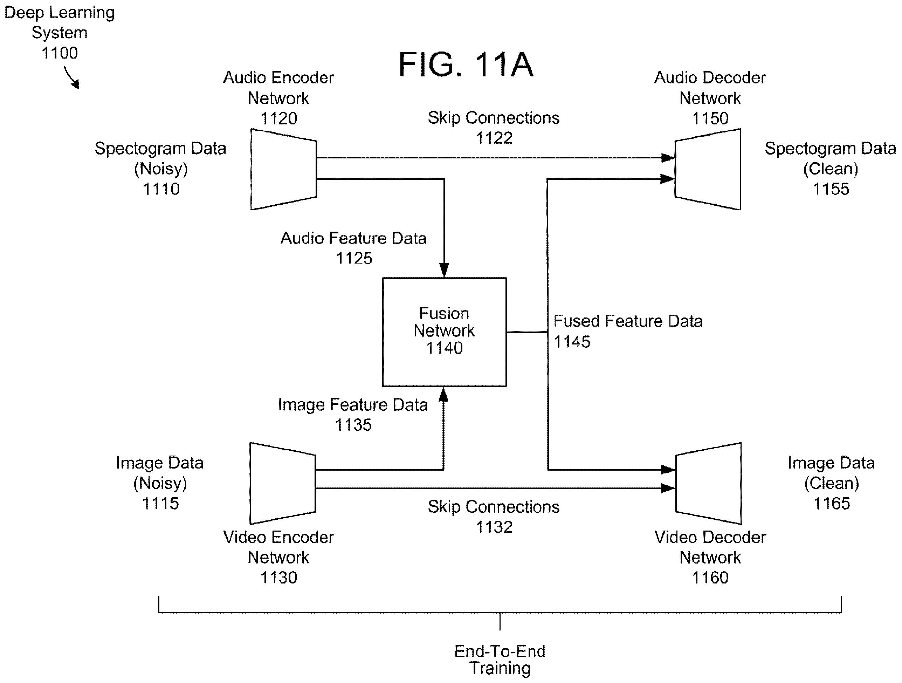

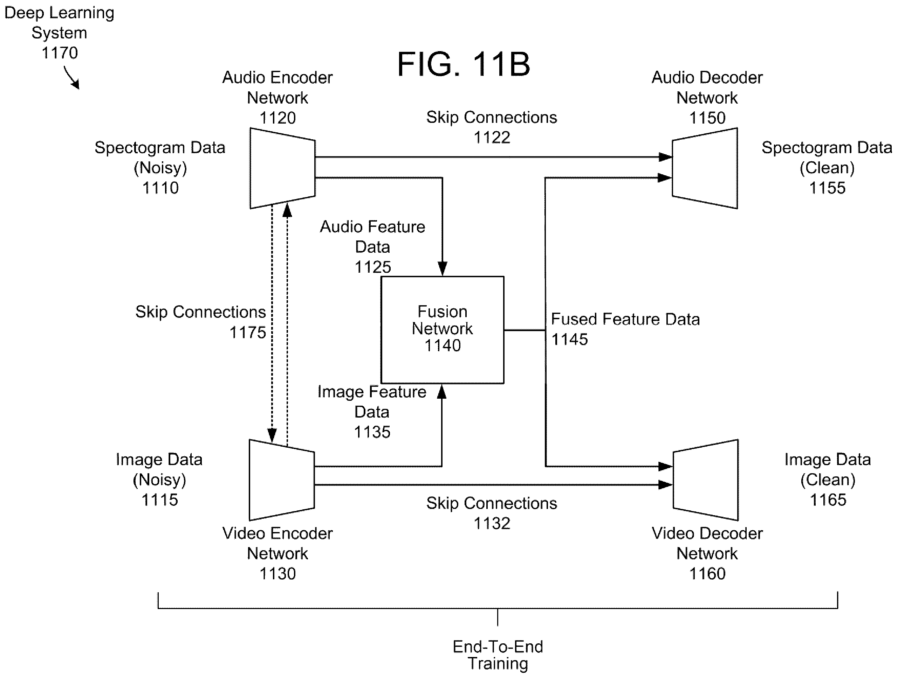

As illustrated in FIG. 1, the device 110 may process (148) the third audio data and the image data using a trained model to generate first data, as described in greater detail below with regard to FIGS. 11-16. Finally, the device 110 may generate (150) output audio data using the first data. For example, the first data may correspond to speech mask data and the device 110 may use the speech mask data to generate the output audio data, which may represent enhanced target speech, although the disclosure is not limited thereto.

In some examples, the device 110 may operate using a microphone array comprising multiple microphones 112. For example, the device 110 may use three or more microphones 112 without departing from the disclosure. In some examples, the device 110 may select microphone pairs from a plurality of microphones 112 without departing from the disclosure. Additionally or alternatively, the device 110 may apply beamforming to generate a plurality of directional audio signals (e.g., beams) without departing from the disclosure. In audio systems, beamforming refers to techniques that are used to isolate audio from a particular direction in a multi-directional audio capture system. Beamforming may be particularly useful when filtering out noise from non-desired directions. Beamforming may be used for various tasks, including isolating voice commands to be executed by a speech-processing system.

One technique for beamforming involves boosting audio received from a desired direction while dampening audio received from a non-desired direction. In one example of a beamformer system, a fixed beamformer unit employs a filter-and-sum structure to boost an audio signal that originates from the desired direction (sometimes referred to as the look-direction) while largely attenuating audio signals that original from other directions. A fixed beamformer unit may effectively eliminate certain diffuse noise (e.g., undesirable audio), which is detectable in similar energies from various directions, but may be less effective in eliminating noise emanating from a single source in a particular non-desired direction. The beamformer unit may also incorporate an adaptive beamformer unit / noise canceller that can adaptively cancel noise from different directions depending on audio conditions.

As an alternative to performing acoustic echo cancellation using the far-end reference signal(s) X(n, k), in some examples the device 110 may generate a reference signal based on the beamforming. For example, the device 110 may use Adaptive Reference Algorithm (ARA) processing to generate an adaptive reference signal based on the microphone signal(s) Z(n, k). To illustrate an example, the ARA processing may perform beamforming using the microphone signal(s) Z(n, k) to generate a plurality of audio signals (e.g., beamformed audio data) corresponding to particular directions. For example, the plurality of audio signals may include a first audio signal corresponding to a first direction, a second audio signal corresponding to a second direction, a third audio signal corresponding to a third direction, and so on. The ARA processing may select the first audio signal as a target signal (e.g., the first audio signal includes a representation of speech) and the second audio signal as a reference signal (e.g., the second audio signal includes a representation of the echo and/or other acoustic noise) and may perform Adaptive Interference Cancellation (AIC) (e.g., adaptive acoustic interference cancellation) by removing the reference signal from the target signal. As the input audio data is not limited to the echo signal, the ARA processing may remove other acoustic noise represented in the input audio data in addition to removing the echo. Therefore, the ARA processing may be referred to as performing AIC, adaptive noise cancellation (ANC), AEC, and/or the like without departing from the disclosure.

In some examples, the device 110 may be configured to perform AIC using the ARA processing to isolate the speech in the microphone signal(s) Z(n, k). The device 110 may dynamically select target signal(s) and/or reference signal(s). Thus, the target signal(s) and/or the reference signal(s) may be continually changing over time based on speech, acoustic noise(s), ambient noise(s), and/or the like in an environment around the device 110. In some examples, the device 110 may select the target signal(s) based on signal quality metrics (e.g., signal-to-interference ratio (SIR) values, signal-to-noise ratio (SNR) values, average power values, etc.) differently based on current system conditions. For example, the device 110 may select target signal(s) having highest signal quality metrics during near-end single-talk conditions (e.g., to increase an amount of energy included in the target signal(s)), but select the target signal(s) having lowest signal quality metrics during far-end single-talk conditions (e.g., to decrease an amount of energy included in the target signal(s)).

In some examples, the device 110 may perform AIC processing without performing beamforming without departing from the disclosure. Instead, the device 110 may select target signals and/or reference signals from the microphone signal(s) Z(n, k) without performing beamforming. For example, a first microphone 112a may be positioned in proximity to the loudspeaker(s) 114 or other sources of acoustic noise while a second microphone 112b may be positioned in proximity to the user 10. Thus, the device 110 may select first microphone signal Z₁(n, k) associated with the first microphone 112a as the reference signal and may select second microphone signal Z₂(n, k) associated with the second microphone 112b as the target signal without departing from the disclosure. Additionally or alternatively, the device 110 may select the target signals and/or the reference signals from a combination of the beamformed audio data and the microphone signal(s) Z(n, k) without departing from the disclosure.

While FIG. 1 illustrates the loudspeaker(s) 114 being internal to the device 110, the disclosure is not limited thereto and the loudspeaker(s) 114 may be external to the device 110 without departing from the disclosure. For example, the device 110 may send the far-end reference signal(s) x(t) to the loudspeaker(s) 114 using a wireless protocol without departing from the disclosure. However, the disclosure is not limited thereto and the loudspeaker(s) 114 may be included in the device 110 and/or connected via a wired connection without departing from the disclosure. For example, the loudspeaker(s) 114 may correspond to a wireless loudspeaker, a television, an audio system, and/or the like connected to the device 110 using a wireless and/or wired connection without departing from the disclosure.

An audio signal is a representation of sound and an electronic representation of an audio signal may be referred to as audio data, which may be analog and/or digital without departing from the disclosure. For ease of illustration, the disclosure may refer to either audio data (e.g., far-end reference audio data or playback audio data, microphone audio data, near-end reference data or input audio data, etc.) or audio signals (e.g., playback signal, far-end reference signal, microphone signal, near-end reference signal, etc.) without departing from the disclosure. Additionally or alternatively, portions of a signal may be referenced as a portion of the signal or as a separate signal and/or portions of audio data may be referenced as a portion of the audio data or as separate audio data. For example, a first audio signal may correspond to a first period of time (e.g., 30 seconds) and a portion of the first audio signal corresponding to a second period of time (e.g., 1 second) may be referred to as a first portion of the first audio signal or as a second audio signal without departing from the disclosure. Similarly, first audio data may correspond to the first period of time (e.g., 30 seconds) and a portion of the first audio data corresponding to the second period of time (e.g., 1 second) may be referred to as a first portion of the first audio data or second audio data without departing from the disclosure. Audio signals and audio data may be used interchangeably, as well; a first audio signal may correspond to the first period of time (e.g., 30 seconds) and a portion of the first audio signal corresponding to a second period of time (e.g., 1 second) may be referred to as first audio data without departing from the disclosure.

As used herein, audio signals or audio data (e.g., far-end reference audio data, near-end reference audio data, microphone audio data, or the like) may correspond to a specific range of frequency bands. For example, far-end reference audio data and/or near-end reference audio data may correspond to a human hearing range (e.g., 20 Hz - 20kHz), although the disclosure is not limited thereto.

Far-end reference audio data (e.g., far-end reference signal(s) x(t)) corresponds to audio data that will be output by the loudspeaker(s) 114 to generate playback audio (e.g., echo signal y(t)). For example, the device 110 may stream music or output speech associated with a communication session (e.g., audio or video telecommunication). In some examples, the far-end reference audio data may be referred to as playback audio data, loudspeaker audio data, and/or the like without departing from the disclosure. For ease of illustration, the following description will refer to the playback audio data as far-end reference audio data. As noted above, the far-end reference audio data may be referred to as far-end reference signal(s) x(t) without departing from the disclosure. As described above, the far-end reference signal(s) may be represented in a time domain (e.g., x(t)) or a frequency/subband domain (e.g., X(n, k)) without departing from the disclosure.

Microphone audio data corresponds to audio data that is captured by the microphone(s) 112 prior to the device 110 performing audio processing such as AIC processing. The microphone audio data may include target speech sₜ(t) (e.g., an utterance, such as near-end speech generated by the user 10), an "echo" signal y(t) (e.g., portion of the playback audio captured by the microphone(s) 112), acoustic noise n(t) (e.g., ambient noise in an environment around the device 110), interfering speech sᵢ(t), and/or the like. As the microphone audio data is captured by the microphone(s) 112 and captures audio input to the device 110, the microphone audio data may be referred to as input audio data, near-end audio data, and/or the like without departing from the disclosure. For ease of illustration, the following description will refer to microphone audio data and near-end reference audio data interchangeably. As noted above, the near-end reference audio data / microphone audio data may be referred to as a near-end reference signal(s) or microphone signal(s) without departing from the disclosure. As described above, the microphone signals may be represented in a time domain (e.g., z(t)) or a frequency/subband domain (e.g., Z(n, k)) without departing from the disclosure.

An "echo" signal y(t) corresponds to a portion of the playback audio that reaches the microphone(s) 112 (e.g., portion of audible sound(s) output by the loudspeaker(s) 114 that is recaptured by the microphone(s) 112) and may be referred to as an echo or echo data y(t).

Output audio data corresponds to audio data after the device 110 performs audio processing (e.g., AIC processing, ANC processing, AEC processing, and/or the like) to isolate the target speech sₜ(t). For example, the output audio data corresponds to the microphone audio data Z(n, k) after subtracting the reference signal(s) X(n, k) (e.g., using AEC component 122), optionally performing residual echo suppression (RES) (e.g., using the RES component), and/or other audio processing known to one of skill in the art. As noted above, the output audio data may be referred to as output audio signal(s) without departing from the disclosure. As described above, the output signal may be represented in a time domain (e.g., out(t)) or a frequency/subband domain (e.g., OUT(n, k)) without departing from the disclosure.

As illustrated in FIG. 1, the output of the AEC component may be represented as M(n, k) and may be referred to as isolated audio signal M(n, k), error audio data M(n, k), error signal M(n, k), and/or the like. Similarly, the output of the transmit side post processing component(s) 128 may be represented as OUT(n, k) and may be referred to as an output signal OUT(n, k).

For ease of illustration, the following description may refer to generating the output audio data by performing acoustic echo cancellation (AEC) processing, residual echo suppression (RES) processing, noise reduction (NR) processing, comfort noise generation (CNG) processing, dereverberation (DER) processing, and/or the like. However, the disclosure is not limited thereto, and the device 110 may generate the output audio data by performing AEC processing, AIC processing, RES processing, NR processing, CNG processing, DER processing, other audio processing, and/or a combination thereof without departing from the disclosure. Additionally or alternatively, the disclosure is not limited to AEC processing and, in addition to or instead of performing AEC processing, the device 110 may perform other processing to remove or reduce unwanted speech s₂(t) (e.g., speech associated with a second user), unwanted acoustic noise n(t), and/or echo signals y(t), such as adaptive interference cancellation (AIC) processing, adaptive noise cancellation (ANC) processing, and/or the like without departing from the disclosure.

FIGS. 2A-2C illustrate examples of frame indexes, tone indexes, and channel indexes. As described above, the device 110 may generate microphone audio data z(t) using microphones 112. For example, a first microphone 112a may generate first microphone audio data z₁(t) in a time domain, a second microphone 112b may generate second microphone audio data z₂(t) in the time domain, and so on. As illustrated in FIG. 2A, a time domain signal may be represented as microphone audio data z(t) 210, which is comprised of a sequence of individual samples of audio data. Thus, z(t) denotes an individual sample that is associated with a time *t*.

While the microphone audio data z(t) 210 is comprised of a plurality of samples, in some examples the device 110 may group a plurality of samples and process them together. As illustrated in FIG. 2A, the device 110 may group a number of samples together in a frame (e.g., audio frame) to generate microphone audio data z(n) 212. As used herein, a variable z(n) corresponds to the time-domain signal and identifies an individual frame (e.g., fixed number of samples s) associated with a frame index *n.*

Additionally or alternatively, the device 110 may convert microphone audio data z(n) 212 from the time domain to the frequency domain or subband domain. For example, the device 110 may perform Discrete Fourier Transforms (DFTs) (e.g., Fast Fourier transforms (FFTs), short-time Fourier Transforms (STFTs), and/or the like) to generate microphone audio data Z(n, k) 214 in the frequency domain or the subband domain. As used herein, a variable Z(n, k) corresponds to the frequency-domain signal and identifies an individual frame associated with frame index *n* and tone index *k*. As illustrated in FIG. 2A, the microphone audio data z(t) 210 corresponds to time indexes 216, whereas the microphone audio data z(n) 212 and the microphone audio data Z(n, k) 214 corresponds to frame indexes 218.

While FIG. 2A illustrates examples of the device 110 converting between microphone audio data z(t) 210 (e.g., time domain signal comprising individual samples), microphone audio data z(n) 212 (e.g., time domain signal comprising audio frames), and microphone audio data Z(n, k) 214 (e.g., frequency domain or subband domain signal), the disclosure is not limited thereto and these concepts may be applied to other audio signals without departing from the disclosure. For example, the device 110 may convert between reference audio data x(t) (e.g., time domain signal comprising individual samples), reference audio data x(n) (e.g., time domain signal comprising audio frames), and reference audio data X(n, k) (e.g., frequency domain or subband domain signal) without departing from the disclosure. Similarly, the device 110 may generate an output signal OUT(n, k) in the frequency or subband domain and then convert to the time domain to generate output signal out(n) or out(t) without departing from the disclosure.

A Fast Fourier Transform (FFT) is a Fourier-related transform used to determine the sinusoidal frequency and phase content of a signal, and performing FFT produces a one-dimensional vector of complex numbers. This vector can be used to calculate a two-dimensional matrix of frequency magnitude versus frequency. In some examples, the system 100 may perform FFT on individual frames of audio data and generate a one-dimensional and/or a two-dimensional matrix corresponding to the microphone audio data Z(n). However, the disclosure is not limited thereto and the system 100 may instead perform short-time Fourier transform (STFT) operations without departing from the disclosure. A short-time Fourier transform is a Fourier-related transform used to determine the sinusoidal frequency and phase content of local sections of a signal as it changes over time.

Using a Fourier transform, a sound wave such as music or human speech can be broken down into its component "tones" of different frequencies, each tone represented by a sine wave of a different amplitude and phase. Whereas a time-domain sound wave (e.g., a sinusoid) would ordinarily be represented by the amplitude of the wave over time, a frequency domain representation of that same waveform comprises a plurality of discrete amplitude values, where each amplitude value is for a different tone or "bin." So, for example, if the sound wave consisted solely of a pure sinusoidal 1 kHz tone, then the frequency domain representation would consist of a discrete amplitude spike in the bin containing 1 kHz, with the other bins at zero. In other words, each tone "k" is a frequency index (e.g., frequency bin).

FIG. 2A illustrates an example of time indexes 216 (e.g., microphone audio data z(t) 210) and frame indexes 218 (e.g., microphone audio data z(n) 212 in the time domain and microphone audio data Z(n, k) 216 in the frequency domain or subband domain). For example, the system 100 may apply FFT processing to the time-domain microphone audio data z(n) 212, producing the frequency-domain microphone audio data Z(n,k) 214, where the tone index "k" (e.g., frequency index) ranges from 0 to K and "n" is a frame index ranging from 0 to N. As illustrated in FIG. 2A, the history of the values across iterations is provided by the frame index "n", which ranges from 1 to N and represents a series of samples over time.

FIG. 2B illustrates an example of performing a K-point FFT on a time-domain signal. As illustrated in FIG. 2B, if a 256-point FFT is performed on a 16 kHz time-domain signal, the output is 256 complex numbers, where each complex number corresponds to a value at a frequency in increments of 16 kHz /256, such that there is 62.5 Hz between points, with point 0 corresponding to 0 Hz and point 255 corresponding to 16 kHz. As illustrated in FIG. 2B, each tone index 220 in the 256-point FFT corresponds to a frequency range (e.g., subband) in the 16 kHz time-domain signal. While FIG. 2B illustrates the frequency range being divided into 256 different subbands (e.g., tone indexes), the disclosure is not limited thereto and the system 100 may divide the frequency range into K different subbands or frequency bins (e.g., K indicates an FFT size) without departing from the disclosure. While FIG. 2B illustrates the tone index 220 being generated using a Fast Fourier Transform (FFT), the disclosure is not limited thereto. Instead, the tone index 220 may be generated using Short-Time Fourier Transform (STFT), generalized Discrete Fourier Transform (DFT) and/or other transforms known to one of skill in the art (e.g., discrete cosine transform, non-uniform filter bank, etc.).

The system 100 may include multiple microphones 112, with a first channel (m=1) corresponding to a first microphone 112a, a second channel (m=2) corresponding to a second microphone 112b, and so on until an M-th channel (m=M) that corresponds to microphone 112M. FIG. 2C illustrates channel indexes 230 including a plurality of channels from channel m1 to channel M. While many drawings illustrate two channels (e.g., two microphones 112), the disclosure is not limited thereto and the number of channels may vary. For the purposes of discussion, an example of system 100 includes "M" microphones 112 (M > 1) for hands free near-end/far-end distant speech recognition applications.

Similarly, the system 100 may include multiple loudspeakers 114, with a first channel (x=1) corresponding to a first loudspeaker 114a, a second channel (x=2) corresponding to a second loudspeaker 114b, and so on until an X-th channel (x=X) that corresponds to loudspeaker 114X. FIG. 2C illustrates channel indexes 230 also including a plurality of reference channels from channel x1 to channel X. For ease of illustration, the following disclosure may refer to a single reference channel, but the disclosure is not limited thereto and the system 100 may modify the techniques described herein based on any number of reference channels without departing from the disclosure.

As described above, while FIG. 2A is described with reference to the microphone audio data z(t), the disclosure is not limited thereto and the same techniques apply to the playback audio data x(t) without departing from the disclosure. Thus, playback audio data x(t) indicates a specific time index *t* from a series of samples in the time-domain, playback audio data x(n) indicates a specific frame index *n* from series of frames in the time-domain, and playback audio data X(n, k) indicates a specific frame index *n* and frequency index *k* from a series of frames in the frequency-domain.

Prior to converting the microphone audio data z(n) and the playback audio data x(n) to the frequency-domain, the device 110 may first perform time-alignment to align the playback audio data x(n) with the microphone audio data z(n). For example, due to nonlinearities and variable delays associated with sending the playback audio data x(n) to the loudspeaker(s) 114 (e.g., especially if using a wireless connection), the playback audio data x(n) is not synchronized with the microphone audio data z(n). This lack of synchronization may be due to a propagation delay (e.g., fixed time delay) between the playback audio data x(n) and the microphone audio data z(n), clock jitter and/or clock skew (e.g., difference in sampling frequencies between the device 110 and the loudspeaker(s) 114), dropped packets (e.g., missing samples), and/or other variable delays.

To perform the time alignment, the device 110 may adjust the playback audio data x(n) to match the microphone audio data z(n). For example, the device 110 may adjust an offset between the playback audio data x(n) and the microphone audio data z(n) (e.g., adjust for propagation delay), may add/subtract samples and/or frames from the playback audio data x(n) (e.g., adjust for drift), and/or the like. In some examples, the device 110 may modify both the microphone audio data and the playback audio data in order to synchronize the microphone audio data and the playback audio data. However, performing nonlinear modifications to the microphone audio data results in first microphone audio data associated with a first microphone to no longer be synchronized with second microphone audio data associated with a second microphone. Thus, the device 110 may instead modify only the playback audio data so that the playback audio data is synchronized with the first microphone audio data.

As described above, room reverberation, additive noise, and residual echo are detrimental factors that negatively impact audio quality for hands-free voice communication systems. For example, a user 10 of a local device 110 may establish a communication session with another device, where digitized speech signals are compressed, packetized, and transmitted via the network(s) 199. One technique for establishing the communication session involves Voice over Internet Protocol (VoIP), although the disclosure is not limited thereto. During the communication session, a large amount of additive noise, reverberation, and/or residual echo is harmful to communication (e.g., reduces an audio quality), and the reverberation lowers intelligibility and makes the speech sound "far" and "hollow."

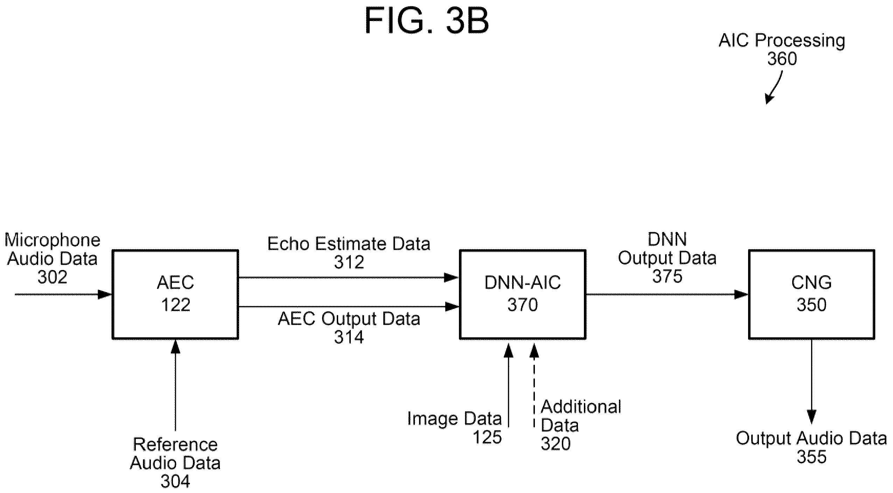

FIGS. 3A-3B illustrate example components for performing dereverberation and noise reduction within a voice processing pipeline according to examples of the present disclosure. As illustrated in FIGS. 3A-3B, the device 110 may generate microphone audio data 302 using one or more microphones 112 and may perform signal processing to the microphone audio data 302 in order to generate output audio data 355. In some examples, the device 110 may perform speech enhancement (SE) processing 300 by including a DNN-SE component 330 configured to perform noise reduction (NR) processing after the acoustic echo cancellation (AEC) component 122, as illustrated in FIG. 3A. In other examples, the device 110 may perform Acoustic Interference Cancellation (AIC) processing 360 by including an AIC deep neural network (DNN-AIC) component 370 after the AEC component 122. For example, the DNN-AIC component 370 is configured to perform joint residual echo suppression and noise reduction (RES+NR) processing, as illustrated in FIG. 3B.

While not illustrated in FIGS. 3A-3B, in some examples the device 110 may perform signal processing in a subband domain and/or frequency domain without departing from the disclosure. For example, a first analysis filterbank (not shown) may convert the microphone audio data 302 from the time domain (e.g., z₀(n)) to the subband domain(e.g., Z₀(n,k)), where *n* is the frame index, *k* = 0 to *N*/2 is the frequency index, and *N* is the number of subbands. As described above, the microphone audio data 302 may include multiple channels corresponding to individual microphones 112 without departing from the disclosure. In some examples, the first analysis filterbank may be configured to convert each channel of the microphone audio data 302 from the time domain to the subband domain without departing from the disclosure. However, the disclosure is not limited thereto, and in other examples the device 110 may include a separate analysis filterbank for each individual microphone without departing from the disclosure. For example, the device 110 may include a second analysis filterbank configured to convert a second microphone signal of the microphone audio data 302 from the time domain (e.g., z₁(n)) to the subband domain (e.g., Z₁(n,k)), and so on.

Additionally or alternatively, the device 110 may include a third analysis filterbank configured to convert reference audio data 304 from the time domain (e.g., x(n)) to the subband domain (e.g., X(n,k)). In some examples, the third analysis filterbank may include a uniform discrete Fourier transform (DFT) filterbank to convert the reference audio data 304 from the time domain into the sub-band domain (e.g., converting to the frequency domain and then separating different frequency ranges into a plurality of individual sub-bands). Therefore, the audio signal *X* may incorporate reference audio signals corresponding to one or more loudspeakers 114 as well as different subbands (i.e., frequency ranges) as well as different frame indices (i.e., time ranges). Thus, the audio signal associated with the xth loudspeaker 114 may be represented as Xₓ(n, k), where *n* denotes the frame index and *k* denotes the sub-band index.

Referring to FIG. 3A, the device 110 may perform speech enhancement processing 300 using the AEC component 122, the DNN-SE component 330, a residual echo suppression (RES) component 340, and/or a comfort noise generator (CNG) component 350. However, the disclosure is not limited thereto and the device 110 may include additional components without departing from the disclosure.

As illustrated in the speech enhancement processing 300 example shown in FIG. 3A, the AEC component 122 may perform echo cancellation (e.g., AEC processing) using reference audio data 304 to generate echo estimate data 312 and AEC output data 314, which may be referred to as isolated audio data. For example, the AEC component 122 may generate an echo estimate Y'(n, k) using the reference signal X(n,k) and may subtract the echo estimate Y'(n, k) from the first microphone signal Z₀(n,k) to generate first isolated signal M₀(n, k). If the echo estimate Y'(n, k) corresponds to the echo signal Y(n, k) represented in the first microphone signal Z₀(n,k), the AEC component 122 may effectively remove the echo signal Y(n, k) and isolate the near-end speech S(n, k). The AEC component 122 may output the echo estimate data 312 and/or the AEC output data 314 (e.g., first isolated signal M₀(n, k)) to the DNN-SE component 330.

The DNN-SE component 330 may be configured to process the AEC output data 314 to jointly mitigate additive noise and reverberation and generate DNN output data 335, as described in greater detail below. As the DNN-SE component 330 is configured to perform noise reduction, the speech enhancement processing 300 may include a RES component 340 that is configured to perform RES processing to generate processed data 345. For example, the DNN-SE component 330 may output the DNN output data 335 to the RES component 340. However, the disclosure is not limited thereto, and in some examples the system 100 may replace both the DNN-SE component 330 and the RES component 340 with the DNN-AIC component 370 without departing from the disclosure.

As illustrated in FIG. 3A, the AEC component 122 may output the echo estimate data 312 to the RES component 340, bypassing the DNN-SE component 330 entirely. While not illustrated in FIG. 3A, the device 110 may include a delay component configured to delay the echo estimate data 312 prior to the RES component 340 without departing from the disclosure.

The RES component 340 may perform RES processing to the DNN output data 335 in order to generate the processed audio data 345. For example, the RES component 340 may perform RES processing in order to suppress echo signals (or undesired audio) remaining in the DNN output data 335 to generate the processed audio data 345. In some examples, the RES component 340 may calculate RES gains (not illustrated) based on the echo estimate data 312 in order to apply additional attenuation. To illustrate an example, the RES component 340 may use the echo estimate data 312 and/or the DNN output data 335 to identify first subbands in which the AEC component 122 applied attenuation. The RES component 340 may then determine whether there are residual echo components represented in the first subbands of the DNN output data 335 and may calculate the RES gains to perform residual echo suppression processing. For example, the RES component 340 may apply the RES gains to the DNN output data 335 in order to generate the processed data 345.

In some examples, the RES component 340 may vary an amount of RES processing based on current conditions, although the disclosure is not limited thereto. Additionally or alternatively, the RES component 340 may perform RES processing differently based on individual frequency indexes. For example, the RES component 340 may control an amount of gain applied to low frequency bands, which are commonly associated with speech.

While not illustrated in FIG. 3A, the RES component 340 may optionally output the RES gains. For example, the RES component 340 may output the RES gains to an Automatic Gain Control (AGC) component (which may also be referred to as adaptive gain control) that processes the output audio data 355, although the disclosure is not limited thereto. In some examples, the RES gains may correspond to the RES mask data, although the disclosure is not limited thereto.

As illustrated in FIG. 3A, the device 110 may include a CNG component 350 configured to receive the processed audio data 345 and generate output audio data 355. For example, the CNG component 350 may generate a first noise signal N_{GEN} using a comfort noise gain (G_{CNG}) and may apply the first noise signal N_{GEN} to the processed audio data 345 to generate the output audio data 355. The CNG processing is beneficial as it adds a small amount of noise that helps smooth transitions caused by the AEC component 122, the DNN-SE component 330, and/or the RES component 340 attenuating the signal.

In some examples, the CNG component 350 may receive the DNN output data 335/375 as complex spectrogram data and may generate the output audio data 355 as audio signals. For example, the CNG component 350 may perform additional processing steps, such as overlap and add filtering and/or the like, to convert the complex spectrogram data to audio waveforms without departing from the disclosure.

While not illustrated in FIG. 3A, the device 110 may include a synthesis filterbank configured to convert the output audio data 335 from the subband domain (e.g., signal OUT(n, k)) to the time domain (e.g., out(t)). For example, the output signal OUT(n, k) in the subband domain may include a plurality of separate sub-bands (e.g., individual frequency bands) and the synthesis filterbank may combine the plurality of subbands to generate the output signal out(t) in the time domain.

While not illustrated in FIG. 3A, in some examples the device 110 may include an automatic gain control (AGC) component (not illustrated) (which may also be referred to as adaptive gain control) and/or a dynamic range compression (DRC) component (not illustrated) (which may also be referred to as dynamic range control) to generate the output signal without departing from the disclosure. The device 110 may apply the AGC processing and/or the DRC processing using any techniques known to one of skill in the art. In some examples, the device 110 may perform additional processing in the time domain using the RES gain values, although the disclosure is not limited thereto. For example, the device 110 may use the RES gain values to estimate an amount of noise represented in the output signal and perform additional processing based on the estimated amount of noise.

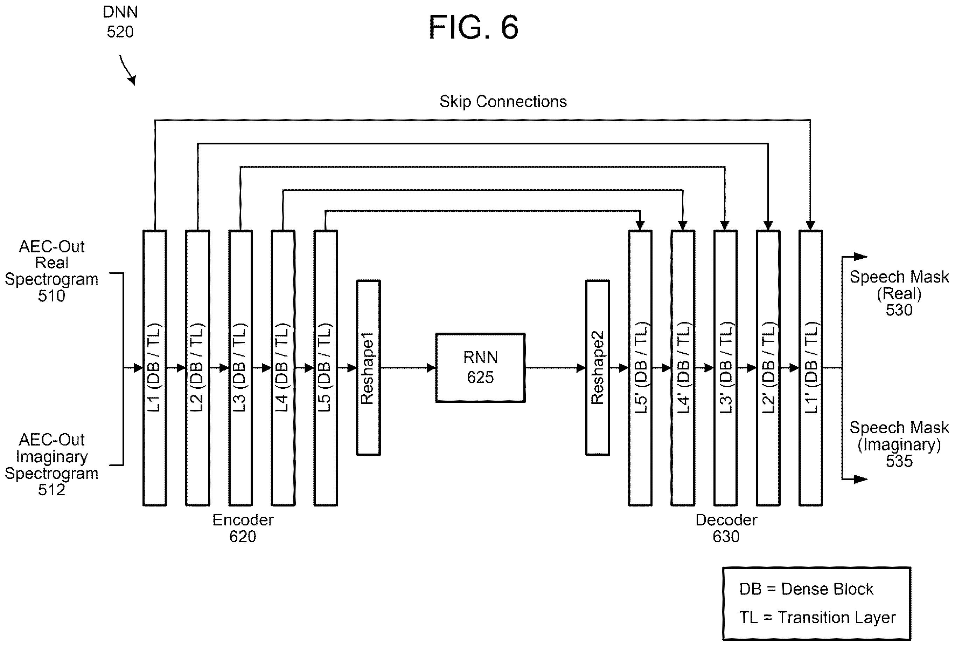

In contrast to the speech enhancement processing 300 illustrated in FIG. 3A, FIG. 3B illustrates that in some examples the system 100 may perform AIC processing 360 by replacing the DNN-SE component 330 and the RES component 340 with the DNN-AIC component 370. For example, the DNN-AIC component 370 may be configured to process the echo estimate data 312 and/or the AEC output data 314 to jointly mitigate additive noise, reverberation, and residual echo in order to generate DNN output data 375. Thus, the DNN-AIC component 370 may be configured to reduce noise and/or suppress echo signals (or other undesired audio) remaining in the first isolated signal M₀(n, k) using an encoder/decoder architecture, as described in greater detail below with regard to FIG. 6. As used herein, both the DNN output data 335 and the DNN output data 375 may be referred to as an enhanced speech signal, which represents target speech more clearly than the AEC output data 314, without departing from the disclosure.

As the DNN-AIC component 370 is configured to mitigate the residual echo, the example of AIC processing 360 illustrated in FIG. 3B does not include the RES component 340. Instead, the DNN-AIC component 370 may output the DNN output data 375 directly to the CNG component 350 without departing from the disclosure. The disclosure is not limited thereto, however, and in other examples the AIC processing 360 may include the RES component 340 and/or the like without departing from the disclosure. For example, the RES component 340 may be configured to receive the DNN output data 375 and perform basic RES processing to generate the processed data 345, which is then input to the CNG component 350, without departing from the disclosure.

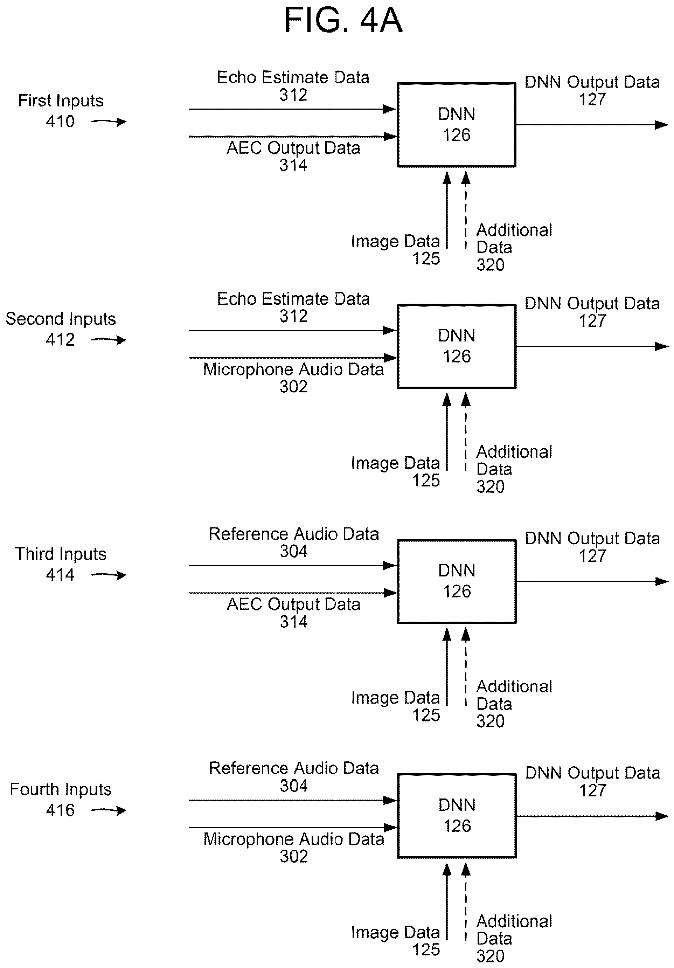

Referring back to FIG. 3A, the DNN-SE component 330 may be configured to process the AEC output data 314, the image data 125, and/or additional data 320, which will be described in greater detail below with regard to FIGS. 4A-4B. In contrast, the DNN-AIC component 370 may be configured to process the echo estimate data 312 in addition to the AEC output data 314, the image data 125, and/or the additional data 320 without departing from the disclosure. For ease of illustration, both the DNN-SE component 330 and the DNN-AIC component 370 may be referred to as the DNN component 126 without departing from the disclosure. For example, the system 100 may implement the speech enhancement processing 300 (e.g., DNN-SE component 330 and the RES component 340) or the AIC processing 360 (e.g., DNN-AIC component 370) interchangeably without departing from the disclosure.

In some examples, the DNN component 126 may receive the echo estimate data 312 and/or the AEC output data 314 as audio signals. However, the disclosure is not limited thereto, and the DNN component 126 may receive complex spectrogram data corresponding to the echo estimate data 312 and/or the AEC output data 314 without departing from the disclosure. In some examples, the DNN component 126 may process first real spectrogram data and first imaginary spectrogram data corresponding to the AEC output data 314, as well as second real spectrogram data and second imaginary spectrogram data corresponding to the echo estimate data 312. In other examples, the DNN component 126 may process magnitude data corresponding to the echo estimate data 312 without departing from the disclosure. For example, the DNN component 126 may process the magnitude data corresponding to the echo estimate data 312 in addition to the first real spectrogram data and the first imaginary spectrogram data corresponding to the AEC output data 314, although the disclosure is not limited thereto.

In some examples, the DNN component 126 may process the echo estimate data 312 and/or the AEC output data 314 to generate speech mask data corresponding to the target speech. For example, the speech mask data may include a plurality of time-frequency values, with an individual time-frequency value indicating a gain value (or mask value) corresponding to an individual time index and frequency index. In some examples, the speech mask data may comprise continuous values ranging from a first value (e.g., 0) to a second value (e.g., 1), although the disclosure is not limited thereto. In this example, the first value corresponds to attenuation and indicates that the selected time-frequency unit does not represent the target speech. Thus, the frequency index is attenuated completely, such that the output audio data 355 does not contain any of the AEC output data 314 associated with the frequency index. In contrast, the second value corresponds to no attenuation (e.g., pass-through gain) and indicates that the selected time-frequency unit represents the target speech. Thus, the frequency index is passed without any attenuation, such that the output audio data 355 includes the AEC output data 314 associated with the frequency index.

In some examples, the DNN output data 335/375 may correspond to enhanced speech audio data. For example, the DNN component 126 may use the speech mask data and the AEC output data 314 to generate an enhanced speech signal and may output the enhanced speech signal to the CNG component 350. However, the disclosure is not limited thereto, and in other examples the DNN component 126 may generate complex spectrogram data representing the target speech without departing from the disclosure. For example, the DNN output data 335/375 may correspond to complex spectrogram data, which may include real spectrogram data and imaginary spectrogram data, although the disclosure is not limited thereto. Additionally or alternatively, the DNN output data 335/375 may correspond to the speech mask data without departing from the disclosure. For example, the DNN component 126 may output the speech mask data and the CNG component 350 and/or an additional component (not illustrated) may process the speech mask data to generate the enhanced speech audio data without departing from the disclosure.

While the example described above refers to the DNN component 126 generating the speech mask data as an intermediate processing step, the disclosure is not limited thereto and the DNN component 126 may generate the enhanced speech audio data without departing from the disclosure. For example, instead of performing two separate steps to generate the speech mask data and then combine the speech mask data with the AEC output data 314 to generate the enhanced speech audio data, the DNN component 126 may be configured to directly generate the enhanced speech audio data. Thus, the DNN component 126 may process the echo estimate data 312 and/or the AEC output data 314 to perform dereverberation, noise reduction, and/or residual echo suppression and generate the enhanced speech audio data without departing from the disclosure.

In some examples, the DNN component 126 may also process additional data 320 without departing from the disclosure. Examples of additional data 320 may include the microphone audio data 302, the reference audio data 304, multichannel reference audio data, speaker type detection data (e.g., classification type and/or number of external loudspeakers configured to generate output audio), state data (e.g., current state of the device), motion data (e.g., linear velocity if the device 110 is in motion, angular velocity if the device 110 is rotating, etc.), and/or the like, although the disclosure is not limited thereto. By feeding the additional data 320 to the DNN component 126, the device 110 may improve an accuracy of the DNN output data 335/375.

As used herein, the DNN components 126/330/370 may be referred to as a trained model, a machine learning model, a neural network, and/or the like without departing from the disclosure. Thus, while the following description refers to performing speech enhancement using a DNN, this is just one example and the disclosure is not limited thereto. Instead, the machine learning model may take many forms, including a neural network, such that the device 110 may perform speech enhancement using any type of trained model, machine learning model, neural network, and/or the like without departing from the disclosure.

As used herein, the device 110 may include a machine learning model that may employ a convolutional neural network and/or a fully-connected neural network. In some examples, a neural network may include a number of layers, from input layer 1 through output layer N. Each layer is configured to output a particular type of data and output another type of data. Thus, a neural network may be configured to input data of type data A (which is the input to layer 1) and output data of type data Z (which is the output from the last layer N). The output from one layer is then taken as the input to the next layer. For example, the output data (data B) from layer 1 is the input data for layer 2 and so forth such that the input to layer N is data Y output from a penultimate layer.

Various machine learning techniques may be used to train and operate models to perform various steps described herein, such as speech enhancement, user recognition, image processing, etc. Models may be trained and operated according to various machine learning techniques. Such techniques may include, for example, neural networks (such as deep neural networks and/or recurrent neural networks), inference engines, trained classifiers, etc. Examples of trained classifiers include Support Vector Machines (SVMs), neural networks, decision trees, AdaBoost (short for "Adaptive Boosting") combined with decision trees, and random forests. Focusing on SVM as an example, SVM is a supervised learning model with associated learning algorithms that analyze data and recognize patterns in the data, and which are commonly used for classification and regression analysis. Given a set of training examples, each marked as belonging to one of two categories, an SVM training algorithm builds a model that assigns new examples into one category or the other, making it a non-probabilistic binary linear classifier. More complex SVM models may be built with the training set identifying more than two categories, with the SVM determining which category is most similar to input data. An SVM model may be mapped so that the examples of the separate categories are divided by clear gaps. New examples are then mapped into that same space and predicted to belong to a category based on which side of the gaps they fall on. Classifiers may issue a "score" indicating which category the data most closely matches. The score may provide an indication of how closely the data matches the category.

In order to apply the machine learning techniques, the machine learning processes themselves need to be trained. Training a machine learning component such as, in this case, one of the first or second models, requires establishing a "ground truth" for the training examples. In machine learning, the term "ground truth" refers to the accuracy of a training set's classification for supervised learning techniques. Various techniques may be used to train the models including backpropagation, statistical learning, supervised learning, semi-supervised learning, stochastic learning, or other known techniques.

As will be described in greater detail below, the DNN component 126/330/370 may operate on one or more feature vectors that represent certain data that may be useful in distinguishing between target speech, interfering speech, and/or non-speech. For example, the device 110 may generate audio feature data and image feature data and the DNN component 126/330/370 may process a combination of the audio feature data and the image feature data as part of generating the DNN output data 127/335/375.

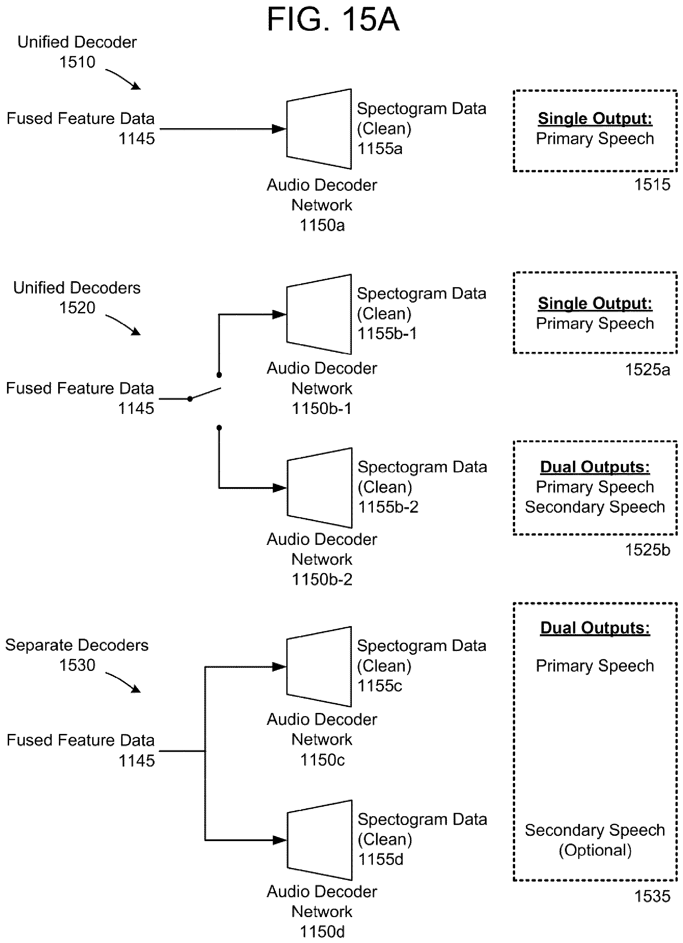

The DNN component 126/330/370 may be trained on many different examples of feature vectors that include both positive and negative training samples (e.g., samples that represent target speech, interfering speech, and/or non-speech) so that the DNN component 126/330/370 and/or other trained model of the device 110 may be capable of robustly detecting target speech and/or distinguishing the target speech from the interfering speech, although the disclosure is not limited thereto. In some examples, the device 110 may be configured to generate two or more target speech signals without departing from the disclosure. For example, if two or more faces are represented in the image data 125, the device 110 may be configured to generate a target speech signal associated with each individual face. In some examples, a DNN and/or audio decoder configured to generate multiple target speech signals may be structured and/or trained differently than a DNN and/or audio decoder configured to generate a single target speech signal, as will be described in greater detail below with regard to FIGS. 15A-15B.

FIG. 4A illustrates examples of input signals according to embodiments of the present disclosure. As illustrated in FIG. 4A, audio input signals processed by the DNN component 126 may vary without departing from the disclosure. For example, the DNN component 126 may process the echo estimate data 312, the AEC output data 314, the microphone audio data 302, the reference audio data 304, and/or any combination thereof without departing from the disclosure. However, while FIG. 4A illustrates multiple examples of the DNN component 126 processing different audio input signals, the image data 125 remains the same in each of the examples illustrated in FIG. 4A. Thus, regardless of which audio input signals are input to the DNN component 126, the DNN component 126 processes the audio input signals along with the image data 125.

While the AIC processing 360 illustrated in FIG. 3B corresponds to an example of the DNN component 126 processing first inputs 410 (e.g., echo estimate data 312 and AEC output data 314), the disclosure is not limited thereto. In some examples, the DNN component 126 may process the microphone audio data 302 instead of processing the AEC output data 314 without departing from the disclosure. Additionally or alternatively, the DNN component 126 may process the reference audio data 304 instead of processing the echo estimate data 312 without departing from the disclosure. For example, if the reference audio data 304 is a multi-channel reference, the DNN component 126 may process the reference audio data 304 instead of multi-channel echo estimates. Thus, the DNN component 126 may process any combination of the microphone audio data 302, the reference audio data 304, the echo estimate data 312, and/or the AEC output data 314 without departing from the disclosure.

As illustrated in FIG. 4A, in a first example the DNN component 126 may process first inputs 410 (e.g., echo estimate data 312 and AEC output data 314), whereas in a second example the DNN component 126 may process second inputs 412 (e.g., echo estimate data 312 and microphone audio data 302). Additionally or alternatively, in a third example the DNN component 126 may process third inputs 414 (e.g., reference audio data 304 and AEC output data 314), whereas in a fourth example the DNN component 126 may process fourth inputs 416 (e.g., reference audio data 304 and microphone audio data 302).

While FIG. 4A illustrates several examples of the DNN component 126 processing two audio input signals, the disclosure is not limited thereto. Instead, in some examples the DNN component 126 may process the AEC output data 314 without departing from the disclosure. For example, the DNN component 126 may process the image data 125 and the AEC output data 314 without processing the echo estimate data 312, the microphone audio data 302, or the reference audio data 304 without departing from the disclosure.

In some examples, the DNN component 126 may process complex spectrogram data associated with an input signal. However, the disclosure is not limited thereto and in other examples the DNN component 126 may process magnitude (e.g., absolute value) data and/or phase data associated with the input signal without departing from the disclosure.

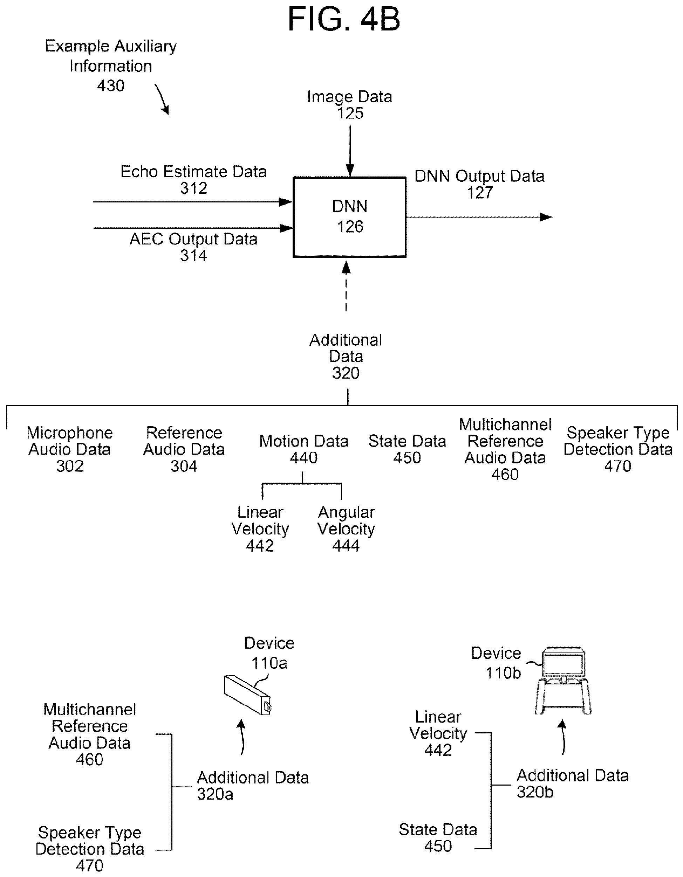

FIG. 4B illustrates example auxiliary information 430 according to embodiments of the present disclosure. As illustrated in FIG. 4B, examples of additional data 320 may include the microphone audio data 302 and/or the reference audio data 304 that are input to the AEC component 122. As the AEC component 122 generates the echo estimate data 312 using the reference audio data 304 and then subtracts the echo estimate data 312 from the microphone audio data 302 to generate the AEC output data 314, processing the microphone audio data 302 and/or the reference audio data 304 may enable the DNN component 126 to more accurately identify residual echo represented in the AEC output data 314. Thus, including the microphone audio data 302 and/or the reference audio data 304 may provide the DNN component 126 additional information that may be used to identify additive noise and/or the residual echo.

In some examples, the additional data 320 may include motion data 440 and/or state data 450 associated with the device 110. The motion data 440 may include a variety of information, such as a linear velocity 442 if the device 110 is in motion (e.g., such as for a device 110 capable of autonomous movement), an angular velocity 444 if the device 110 is capable of rotation (e.g., rotating a display of the device 110), and/or the like. Similarly, the state data 320 may indicate a current state of the device 110 and/or additional state information indicating current conditions and/or settings associated with the device 110.

In some examples, the additional data 320 may include multichannel reference audio data 460 and/or speaker type detection data 470. For example, the device 110 may be configured to output media content, which may include sending the multichannel reference audio data 460 to one or more external loudspeakers. In this example, the device 110 may perform speaker type detection to determine a classification type of loudspeaker(s), a total number of external loudspeakers, and/or the like. In some examples, the speaker type detection may correspond to classification data indicating a classification type associated with one or more external loudspeaker(s) (e.g., external to the device 110), with the classification type indicating whether the loudspeaker(s) correspond to a soundbar device, a surround sound system (e.g., 5.1 surround sound, 7.1 surround sound, and/or the like), other audio output devices, and/or the like, although the disclosure is not limited thereto.

As illustrated in FIG. 4B, the type and amount of additional data 320 may vary depending on the device 110. For example, a first device 110a may be configured to generate the output media content described above. Thus, the first device 110a may process first additional data 320a, which may include the multichannel reference audio data 460, the speaker type detection data 470, and/or other auxiliary information corresponding to outputting media content using external loudspeakers. In contrast, a second device 110b may be capable of autonomous movement and may process second additional data 320b, which may include motion data 440 (e.g., linear velocity 442), state data 450, and/or the like without departing from the disclosure.

While FIGS. 4A-4B illustrate examples of the DNN component 126 processing the image data 125, the disclosure is not limited thereto. In some examples, the DNN component 126 may process the image data 125 as well as additional data generated from the image data 125, such as facial landmark data or the like. For example, the device 110 may process the image data 125 to generate facial landmark data representing one or more facial landmarks associated with a face represented in the image data 125, as will be described in greater detail below with regard to FIGS. 11-12.

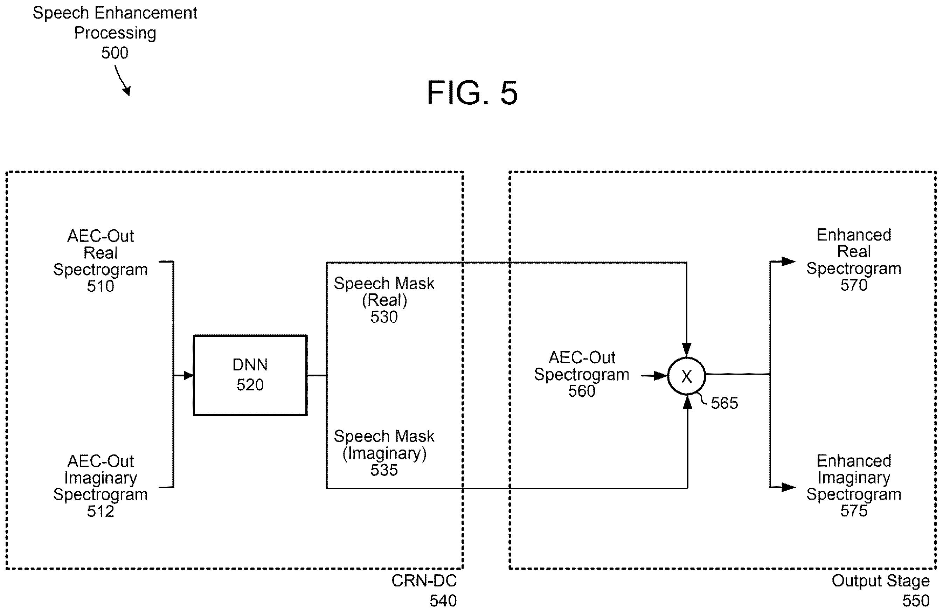

As described above, the DNN component 126 is configured to process both audio input signals and the image data 125 to perform speech enhancement and generate the DNN output data 127. For example, the DNN component 126 may include both an audio encoder/decoder network and a video encoder/decoder network that may be jointly trained to perform speech enhancement, as described in greater detail below with regard to FIGS. 11A-11B. For ease of illustration, however, FIGS. 5-10 illustrate examples of the audio encoder/decoder network, independent of the video encoder/decoder network, with a corresponding description going into detail about this audio-only DNN component. Thus, the audio encoder/decoder network described with regard to FIGS. 11A-11B may be adapted from the audio-only DNN solution described with regard to FIGS. 5-10 without departing from the disclosure.

FIG. 5 illustrates an example of a densely connected convolutional recurrent network according to examples of the present disclosure. As illustrated in FIG. 5, in some examples the device 110 may perform speech enhancement processing 500 using a densely connected convolutional recurrent network (CRN-DC) 540 configured to generate speech mask data without departing from the disclosure. For example, the CRN-DC 540 may be configured to generate the speech mask data and an output stage 550 may be configured to generate enhanced speech data using the speech mask data. However, while FIG. 5 illustrates an example in which the CRN-DC 540 generates the speech mask data, the disclosure is not limited thereto and the CRN-DC 540 may generate the enhanced speech data without departing from the disclosure.

In some examples, the CRN-DC 540 may be configured to process a single audio input signal, such as the AEC output data 314, although the disclosure is not limited thereto. For example, FIG. 5 illustrates an example in which the CRN-DC 540 is configured to process two input channels (e.g., AEC-Out real spectrogram 510 and AEC-Out imaginary spectrogram 512) in order to generate speech mask (real) 530 and speech mask (imaginary) 535, as described in greater detail below with regard to FIG. 6.

In other examples, however, the CRN-DC 540 may be configured to process two or more audio input signals without departing from the disclosure. For example, the CRN-DC 540 may be configured to process both the echo estimate data 312 and the AEC output data 314. Thus, the CRN-DC 540 may be configured to process four input channels, which may include an echo-estimate real spectrogram (not illustrated) and an echo-estimate imaginary spectrogram (not illustrated) in addition to the AEC-Out real spectrogram 510 and the AEC-Out imaginary spectrogram 512 described above. The disclosure is not limited thereto, however, and the CRN-DC 540 may be configured to process any combination of two or more audio input signals without departing from the disclosure.

Additionally or alternatively, while not illustrated in FIG. 5, the CRN-DC 540 may also process the additional data 320, as described in greater detail above with regard to FIG. 4B.

As illustrated in FIG. 5, the CRN-DC 540 may include a DNN component 520 configured to perform speech enhancement. For example, the DNN component 520 may correspond to either (i) the DNN-SE component 330 configured to perform speech enhancement processing 300 to generate DNN output data 335 (e.g., perform noise reduction processing to jointly mitigate additive noise and reverberation), or (ii) the DNN-AIC component 370 configured to perform AIC processing 360 to generate DNN output data 375 (e.g., jointly perform noise reduction and residual echo suppression to mitigate additive noise, reverberation, and residual echo). While the audio input signals and/or training data may vary between the DNN-SE component 330 and the DNN-AIC component 370, the overall structure and operation may be similar. Thus, the following description does not distinguish between the DNN-SE component 330 and the DNN-AIC component 370.

For ease of illustration, FIGS. 5-6 illustrate examples in which the DNN component 520 is configured to process a single audio input signal, such as the AEC output data 314 (e.g., AEC-Out real spectrogram 510 and AEC-Out imaginary spectrogram 512). However, the disclosure is not limited thereto, and the DNN component 520 may be configured to jointly process two or more audio input signals without departing from the disclosure. Thus, the description of the DNN component 520 may be adapted such that the DNN component 520 processes the AEC output data 314, the echo estimate data 312 (e.g., echo-estimate real spectrogram and echo-estimate imaginary spectrogram), and/or the like without departing from the disclosure.

As illustrated in FIG. 5, in some examples the device 110 may perform the speech enhancement processing 500 using complex spectrogram data without departing from the disclosure. For example, the CRN-DC 540 may process the AEC output data 314 as first complex spectrogram data (e.g., AEC-Out real spectrogram 510 and AEC-Out imaginary spectrogram 512) and the echo estimate data 312 as second complex spectrogram data (e.g., echo-estimate real spectrogram (not illustrated) and an echo-estimate imaginary spectrogram (not illustrated)). However, the disclosure is not limited thereto, and the CRN-DC 540 may process the echo estimate data 312 and/or the AEC output data 314 as audio data, complex spectrogram data, phase/magnitude data, and/or the like without departing from the disclosure. For example, the CRN-DC 540 may process the echo estimate data 312 as a magnitude spectrum without departing from the disclosure.

Similarly, the CRN-DC 540 may generate the speech mask data as complex data (e.g., speech mask (real) 530 and speech mask (imaginary) 535) and the output stage 550 may generate the enhanced speech data as third complex spectrogram data (e.g., enhanced real spectrogram 570 and the enhanced imaginary spectrogram 575), although the disclosure is not limited thereto.

When the DNN component 520 is configured to generate speech mask data, the device 110 may perform additional processing to generate the DNN output data 335/375 illustrated in FIGS. 3A-3B. For example, the device 110 may include the CRN-DC 540 along with additional components and/or logic configured to process the speech mask data to generate the DNN output data 335/375, such as the output stage 550.

In the example illustrated in FIG. 5, the output stage 550 may be configured to generate enhanced spectrogram data. For example, the output stage 550 may include a combining (e.g., multiplier) component 565 configured to multiply the speech mask data (e.g., the speech mask (real) 530 and the speech mask (imaginary) 535) with the AEC-Out spectrogram 560 (e.g., the AEC-Out real spectrogram 510 and the AEC-Out imaginary spectrogram 512) to generate the enhanced spectrogram data (e.g., the enhanced real spectrogram 570 and the enhanced imaginary spectrogram 575). Thus, the output stage 550 multiplies the speech mask data by the AEC-Out spectrogram 560 to generate the enhanced spectrogram data, which ideally only has de-reverberant speech without any traces of additive noise and residual echo. In some examples, the device 110 only calculates the enhanced spectrogram data in a loss function and/or during inferencing, although the disclosure is not limited thereto.

While FIG. 5 illustrates the DNN component 520 generating the speech mask data, the disclosure is not limited thereto and the output of the DNN component 520 may vary without departing from the disclosure. In other examples, the DNN component 520 may generate complex spectrogram data representing the speech without departing from the disclosure. For example, instead of performing two steps to generate the speech mask data and combine the speech mask data with the AEC output data 314 to generate the complex spectrogram data representing target speech, the DNN component 520 may be configured to directly output complex spectrogram data representing the target speech. Thus, the DNN component 520 may process the estimated echo data 312 and the AEC output data 314 to perform dereverberation, noise reduction, and/or residual echo suppression and generate the complex spectrogram data without departing from the disclosure.

In some examples, the DNN component 126 may generate complex spectrogram data representing the speech, such as the enhanced real spectrogram 570 and enhanced imaginary spectrogram 575 illustrated in FIG. 5. Thus, additional components (e.g., CNG component 350, AGC component, and/or the like) of the device 110 may further process the complex spectrogram data before generating output audio data in the time domain (e.g., by performing overlap and add filtering and/or the like). However, the disclosure is not limited thereto, and in other examples the DNN component 126 may output processed audio data without departing from the disclosure. For example, the device 110 may process the input signals using the trained model to generate speech mask data, and the device 110 may then use the speech mask data to generate the processed audio data in the time domain without departing from the disclosure.

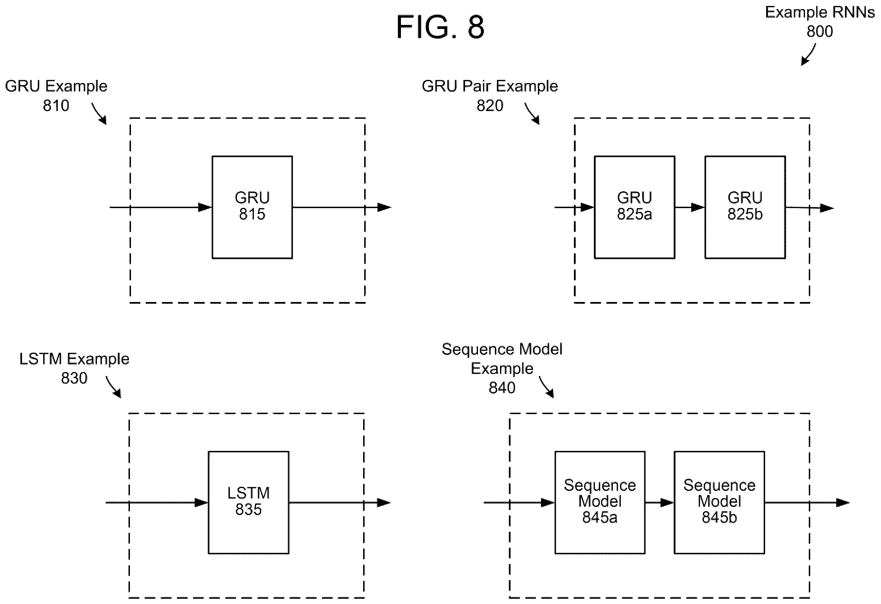

FIG. 6 illustrates an example component diagram for performing noise reduction and residual echo suppression within a voice processing pipeline according to examples of the present disclosure. As illustrated in FIG. 6, a DNN component 520 may use an encoder-decoder structure, with skip connections connecting layers in an encoder 620 with corresponding layers in a decoder 630. In addition, the DNN component 520 may include a recurrent neural network (RNN) component 625 between the encoder 620 and the decoder 630, as described in greater detail below with regard to FIG. 8.

As illustrated in FIG. 6, in some examples the input to the encoder 620 is a first complex-valued spectrogram corresponding to the AEC output data 314. For example, the encoder 620 may be configured to process two input channels, such as the AEC-Out real spectrogram 510 and the AEC-Out imaginary spectrogram 512. The disclosure is not limited thereto, however, and in other examples the input to the encoder 620 may also include a second complex-valued spectrogram without departing from the disclosure. For example, the second complex-value spectrogram may correspond to the echo estimate data 312, such that the encoder 620 may be configured to process four input channels, which include the AEC-Out real spectrogram 510 and the AEC-Out imaginary spectrogram 512 described above along with an echo-estimate real spectrogram and an echo-estimate imaginary spectrogram that correspond to the echo estimate data 312.

The disclosure is not limited thereto, however, and the first complex-value spectrogram and/or the second complex-value spectrogram may correspond to the microphone audio data 302 and/or the reference audio data 304 without departing from the disclosure. Additionally or alternatively, the encoder 620 may also receive additional data 320, as described in greater detail above with regard to FIG. 4B, without departing from the disclosure.

After processing the input data using the encoder component 620, the RNN component 625, and the decoder component 630, the DNN component 520 may generate a complex-valued mask that retains most of the target speech while suppressing and/or attenuating the additive noise components and residual echo. For example, the decoder component 630 may generate a speech mask (real) 530 representing real components of the speech and a speech mask (imaginary) 535 representing imaginary components of the speech.

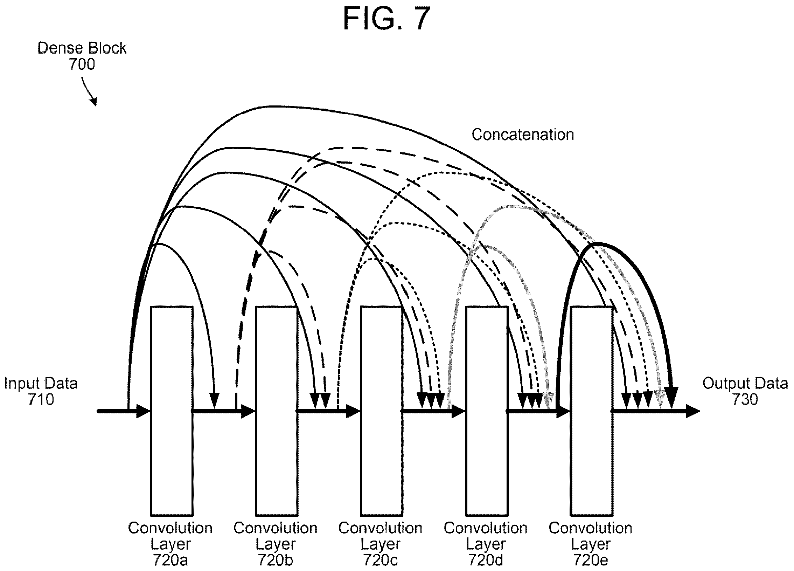

As illustrated in FIG. 6, the encoder 620 may include five stacked dense convolutional layers, followed by a reshape layer, although the disclosure is not limited thereto. An individual convolutional layer may include a dense block followed by a transition layer, as described in greater detail below with regard to FIG. 7. For example, at the end of each dense layer, a transition layer controls the number of feature maps propagating from one dense block to another and also applies downsampling and upsampling of the feature maps in the encoder 620 and decoder 630, respectively. In some examples, one or more of the convolutional layers may be implemented as a depthwise separable convolution without departing from the disclosure. For example, performing depthwise separable convolution may apply a kernel that processes each channel individually (e.g., without mixing channels) and then combining the channels together (e.g., stacking convolved feature maps into an output tensor), although the disclosure is not limited thereto. While not illustrated in FIG. 6, the DNN component 520 may include a dropout layer in order to apply regularization to the DNN modeling, although the disclosure is not limited thereto.

FIG. 7 illustrates an example structure of a dense block according to embodiments of the present disclosure. As illustrated in FIG. 7, a dense block 700 is composed of stack convolutional layers 720 such that a layer deeper in the stack receives the feature maps of all preceding convolutional layers 720. For example, a first convolution layer 720a receives input data 710 and generates a first output, which is concatenated with the input data 710 to generate a first combined input to a second convolution layer 720b. The second convolution layer 720b processes the first combined input (e.g., concatenation of the input data 710 and the first output) to generate a second output, which is concatenated with the input data 710 and the first output to generate a second combined input to a third convolution layer 720c. The third convolution layer 720c processes the second combined input (e.g., concatenation of the input data 710, the first output, and the second output), and so on until a fifth convolution layer 720e generates output data 730. Thus, the fifth convolution layer 720e generates the output data 730, which includes all of the feature layers of the dense block 700 stacked together.

As continuing this process would result in a huge number of feature layers and increase processing consumption of the device 110, the DNN component 520 may include a transition layer configured to control the number of feature maps propagating from one dense block 700 to another and also applying downsampling and upsampling of the feature maps in the encoder 620 and decoder 630, respectively. Thus, the DNN component 520 includes transition layers between each dense block in order to limit how many feature layers are passed between the dense blocks. For example, a first dense convolution layer (L1) of the encoder 620 may include a first dense block 700a and a first transition layer. The first dense block 700a may be configured to generate first output data 730a comprising a first number of feature layers, while the first transition layer may act as a bottleneck layer and generate output data comprising a second number of feature layers. In some examples, the first transition layer may reduce from the first number of feature layers (e.g., 200) to the second number of feature layers (e.g., 40), although the disclosure is not limited thereto and the number of feature layers may vary without departing from the disclosure.

While FIGS. 6-7 illustrate examples of convolutional layers and/or architecture, these are provided to conceptually illustrate an example and the disclosure is not limited thereto. In some examples, the system 100 may use alternative architectures and/or neural networks without departing from the disclosure. For example, the DNN 520 may include convolutional layers that do not correspond to the dense block 700 without departing from the disclosure.

Referring back to FIG. 6, the decoder component 630 may mirror the encoder component 620 by including a reshape layer and five stacked dense convolutional layers, which perform similar processing as described above with regard to the encoder component 620. The output of the decoder component 630 is a speech mask (real) 530 representing real components of the speech and a speech mask (imaginary) 535 representing imaginary components of the speech.

While FIG. 6 illustrates an example in which the encoder component 620 and the decoder component 630 include five stacked dense convolutional layers, the disclosure is not limited thereto. In some examples, the encoder component 620 and the decoder component 630 may have any number of stacked dense convolutional layers without departing from the disclosure. For example, the encoder component 620 and the decoder component 630 may include three stacked dense convolutional layers, although the disclosure is not limited thereto. Thus, the encoder component 620 and/or the decoder component 630 may contain anywhere from two stacked dense convolutional layers to N stacked dense convolutional layers without departing from the disclosure.

Between the encoder component 620 and the decoder component 630, the DNN component 520 may include the RNN component 625 in order to model the long-term temporal variations. While the dense blocks are a form of deeper tensor, the RNN component 625 may work on a time sequence in a single dimension. To enable the RNN component 625 to function properly, the DNN component 520 may include reshape layers (e.g., Reshape1 and Reshape2) and/or an optional dropout layer (e.g., Dropout x%, not illustrated) configured to perform regularization. For example, these layers may be regularization layers configured to flatten the tensor output of the dense blocks to an input that the RNN component 625 is configured to consume.

FIG. 8 illustrates examples of recurrent neural network components according to embodiments of the present disclosure. As illustrated in FIG. 8, the RNN component 625 may correspond to a variety of different layers, such as a gated recurrent unit (GRU), multiple GRUs, long short-term memory (LSTM) layers, one or more sequence models, and/or the like without departing from the disclosure. For example, example RNNs 800 may include a GRU example 810 (e.g., a single GRU layer 815), a GRU pair example 820 (e.g., two GRU layers 825a/825b), an LSTM example 830 (e.g., a single LSTM layer 835), and a sequence model example 840 (e.g., two sequence model layers 845a/845b). However, these examples are intended to conceptually illustrate an example and the disclosure is not limited thereto. Thus, the DNN component 520 may include any type, number, and/or combination of recurrent layers without departing from the disclosure.

Referring back to FIG. 6, the DNN component 520 may include skip connections that connect layers between the encoder 620 and the decoder 630. For example, a fifth dense convolution layer (L5) of the encoder 620 may have a first skip connection to a first dense convolution layer (L5') of the decoder 630, a fourth dense convolution layer (L4) of the encoder 620 may have a second skip connection to a second dense convolution layer (L4') of the decoder 630, and so on. These skip connections are used during training with back propagation, allowing better gradient flow to train the DNN component 520. Thus, the skip connections enable the DNN component 520 to update weights properly during back propagation, as without the skip connections the gradient layers vanish and the weights may not be updated properly.

While FIG. 6 illustrates an example in which each dense convolution layer of the encoder 620 receives the combined inputs (e.g., AEC-Out real spectrogram 510 and AEC-Out imaginary spectrogram 512), the disclosure is not limited thereto. In some examples, the DNN component 520 may include a separate set of dense convolution layers for each input signal (e.g., complex-valued spectrogram), with a first set of dense convolution layers processing the AEC-Out input (e.g., AEC-Out real spectrogram 510 and AEC-Out imaginary spectrogram 512), and a second set of dense convolution layers processing the echo-estimate input (e.g., echo-estimate real spectrogram and echo-estimate imaginary spectrogram).

In this example, the first dense convolution layer (L1) could be split in half, with a first portion processing the AEC-Out input and a second portion processing the echo-estimate input. The encoder 620 could continue to separate these inputs for one to three dense convolution layers (e.g., L1, L1-L2, or L1-L3) without departing from the disclosure. For example, the encoder 620 of the DNN component 520 could separate the two input signals for the first three dense convolution layers (e.g., L1-L3), then a third transition layer of the third dense convolution layer (L3) may combine the two sets of feature layers and output the combined feature layers to the fourth dense convolution layer (L4), although the disclosure is not limited thereto. However, the number of dense convolution layers and/or how the feature layers are combined may vary without departing from the disclosure. For example, the DNN component 520 may combine the two sets of feature layers using a transition layer associated with the dense convolution layers, as described above, or the DNN component 520 may include an additional bottleneck layer with an additional skip connection without departing from the disclosure.

While FIG. 6 illustrates examples in which the encoder component 620 and the decoder component 630 each includes five stacked dense convolutional layers, the disclosure is not limited thereto. Instead, the number of convolutional layers may vary without departing from the disclosure. For example, this may be a design parameter and the DNN component 520 may include fewer convolutional layers or additional convolutional layers without departing from the disclosure.

As illustrated in FIG. 6, in some examples the DNN component 520 may process complex spectrogram data without departing from the disclosure. For example, the device 110 may process the AEC output data 314 to generate the AEC-Out real spectrogram 510 and the AEC-Out imaginary spectrogram 512. Similarly, the device 110 may process the echo estimate data 312 to generate an echo-estimate real spectrogram and an echo-estimate imaginary spectrogram without departing from the disclosure. Thus, the DNN component 520 may process the AEC-Out real spectrogram 510, the AEC-Out imaginary spectrogram 512, an echo-estimate real spectrogram, and an echo-estimate imaginary spectrogram, without departing from the disclosure.

The disclosure is not limited thereto, however, and the DNN component 520 may process other complex spectrogram data without departing from the disclosure. For example, the DNN component 520 may process a phase/magnitude representation of the AEC output data 314 and/or the echo estimate data 312, a single-input magnitude representation of the AEC output data 314 and/or the echo estimate data 312, and/or the like without departing from the disclosure. Additionally or alternatively, the DNN component 520 may process a time-domain signal without departing from the disclosure. For example, the DNN component 520 may process the AEC output data 314 and/or the echo estimate data 312 in the time-domain without departing from the disclosure.

As illustrated in FIG. 6, the DNN component 520 may generate speech mask data, such as the speech mask (real) 530 representing real components of the speech and the speech mask (imaginary) 535 representing imaginary components of the speech, without departing from the disclosure. This enables the device 110 to output the speech mask data to additional components for further processing and/or functionality. For example, the DNN component 126 may output the speech mask data to the CNG component 350, a voice activity detection (VAD) component (not illustrated), an automatic gain control (AGC) component (not illustrated), and/or other components without departing from the disclosure. In some examples, the speech mask data may be used as an estimate of voice activity detection without performing VAD processing, although the disclosure is not limited thereto.

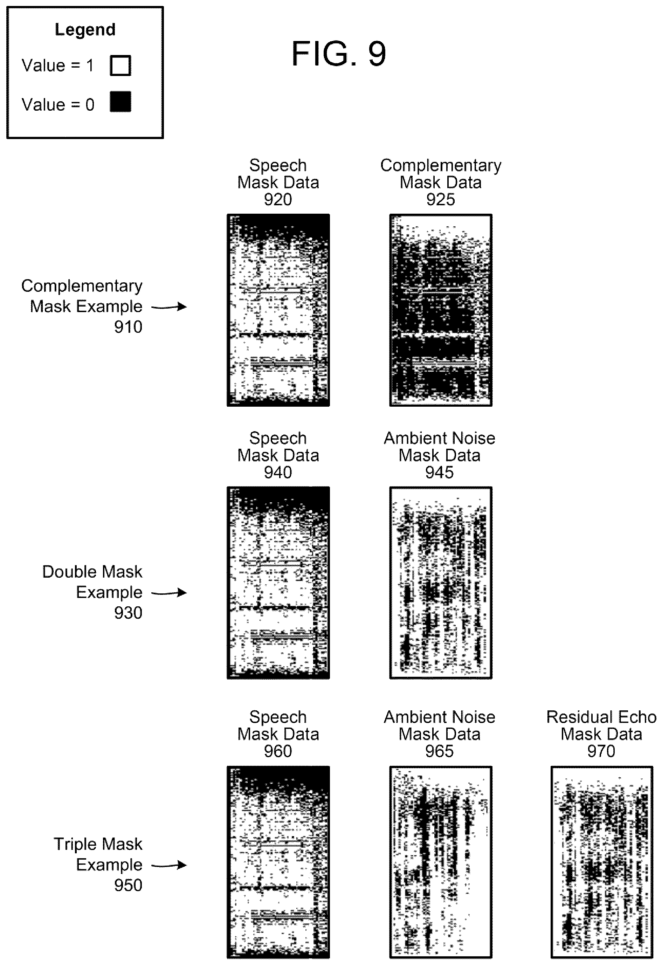

FIG. 9 illustrates examples of mask data generated by the densely connected convolutional recurrent network according to embodiments of the present disclosure. As described in greater detail above, the device 110 may generate speech mask data corresponding to target speech, with the speech mask data enabling the device 110 to generate enhanced audio data representing the target speech. For example, the speech mask data may include a plurality of time-frequency values, with an individual time-frequency value indicating a gain value (or mask value) corresponding to an individual time index and frequency index.

In some examples, the speech mask data may comprise continuous values ranging from a first value (e.g., 0) to a second value (e.g., 1), although the disclosure is not limited thereto. In these examples, the first value corresponds to attenuation and indicates that the selected time-frequency unit does not represent the target speech. Thus, the frequency index is attenuated completely, such that the output audio data 355 does not contain any of the AEC output data 314 associated with the frequency index. In contrast, the second value corresponds to no attenuation (e.g., pass-through gain) and indicates that the selected time-frequency unit represents the target speech. Thus, the frequency index is passed without any attenuation, such that the output audio data 355 includes the AEC output data 314 associated with the frequency index.

In the examples illustrated in FIG. 9, the first value (e.g., 0) is represented by a first color (e.g., black) and indicates that the frequency index is not associated with the target speech for a particular time index, while the second value (e.g., 0) is represented by a second color (e.g., white) and indicates that the corresponding frequency index is associated with the target speech for a particular time index. Using the speech mask data, the device 110 may select portion(s) of the AEC output data 314 that represents the target speech as part of reconstructing an audio waveform and generating output audio data corresponding to the target speech.

For ease of illustration, the mask data illustrated in FIG. 9 is represented as a binary mask, such that a value of the time-frequency units corresponds to a first binary value (e.g., 0) or a second binary value (e.g., 1). However, this is intended to conceptually illustrate a simple example and the disclosure is not limited thereto. Instead, the mask data may be represented using continuous values ranging from the first value (e.g., 0) to the second value (e.g., 1), such that the value indicates a variable amount of attenuation. For example, a time-frequency unit may be associated with both target speech and noise without departing from the disclosure, with a third value (e.g., 0.50) indicating that the time-frequency unit corresponds to partial attenuation (e.g., 50% attenuation), although the disclosure is not limited thereto.

In some examples, the DNN component 126 may be configured to generate a single output signal without departing from the disclosure. For example, FIG. 9 illustrates a complementary mask example 910, in which the DNN component 126 may generate speech mask data 920 corresponding to the target speech. Using the speech mask data 920, the device 110 may generate first audio data representing the target speech.

While the DNN component 126 is only configured to generate the speech mask data 920, the device 110 may generate complementary mask data 925 by taking an inverse of the target mask data 920. As the complementary mask data 925 is an inverse of the speech mask data 920, the complementary mask data 925 may represent everything but the target speech, such as additive noise, residual echo, and/or the like. In some examples, the device 110 may optionally use the complementary mask data 925 to generate second audio data representing everything but the target speech, although the disclosure is not limited thereto.

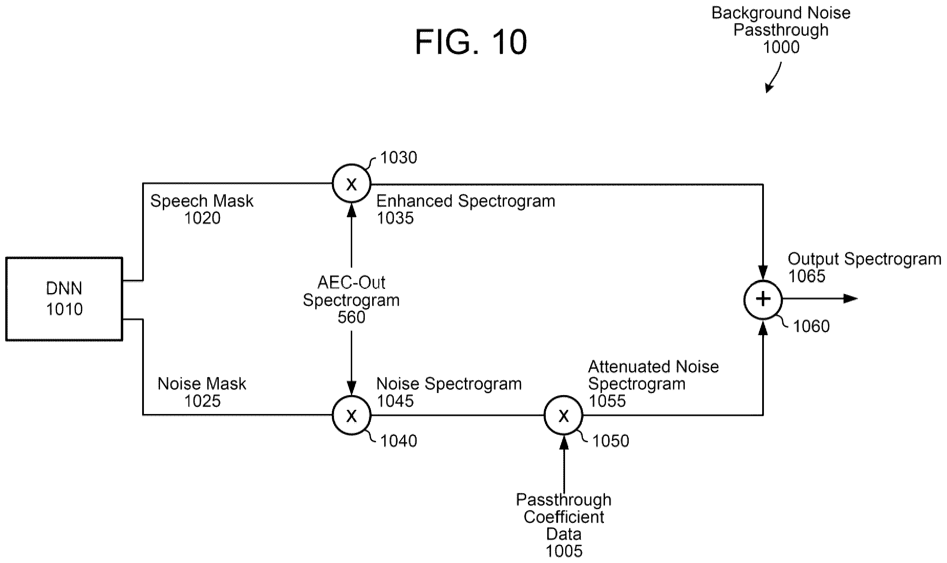

In other examples, the DNN component 126 may be configured to generate two masks without departing from the disclosure. For example, FIG. 9 illustrates a double mask example 930, in which the DNN component 126 may generate speech mask data 940 corresponding to the target speech and ambient noise mask data 945 corresponding to background noise (e.g., acoustic ambient noise, environmental noise, and/or the like). Using the target mask data 940 and the ambient noise mask data 945, the device 110 may generate first audio data representing the target speech and second audio data representing the noise signal(s), although the disclosure is not limited thereto. For example, the device 110 may combine the first audio data and a portion of the second audio data in order to represent the target speech and a portion of background noise, as described in greater detail below with regard to FIG. 10.

Additionally or alternatively, the DNN component 126 may be configured to generate three masks without departing from the disclosure. For example, FIG. 9 illustrates a triple mask example 950, in which the DNN component 126 may be configured to generate speech mask data 960 representing target speech, ambient noise mask data 965 representing background noise (e.g., acoustic ambient noise, environmental noise, and/or the like), and residual echo mask data 970 representing residual echo and/or other undesired audio. Using the speech mask data 960, the device 110 may generate first audio data representing the target speech. Using the ambient noise mask data 965, the device 110 may generate second audio data representing background noise, which may optionally be added to the first audio data to provide a listener with ambient sounds captured by the device 110. In contrast, the device 110 may use the residual echo mask data 970 to suppress the residual echo and/or other undesired audio without departing from the disclosure. For example, the device 110 may generate third audio data representing the residual echo and may perform additional processing to remove at least a portion of the third audio data, although the disclosure is not limited thereto.

As used herein, the ambient noise mask data 945/965 may correspond to acoustic ambient noise present in an environment of the device 110. For example, the acoustic ambient noise may correspond to human-generated audible sounds (e.g., speech, singing, music, and/or the like generated by humans), audible sounds associated with one or more acoustic events (e.g., pet noises, mechanical noises unrelated to the device 110, road noise, and/or the like), music or other media content output by loudspeakers in the environment (e.g., output audio not associated with the device 110), background noise(s) (e.g., hum of conversation, sounds of nature, etc.), and/or the like. However, the acoustic ambient noise does not correspond to mechanical noise and/or structural noise associated with the device 110, which should instead be included in the residual echo mask data 970. For example, movement of the device 110 may result in structural borne noise (e.g., conductive noise and/or vibrations) that transfers sound waves via physical connections to the microphone(s) 112, resulting in the audio data capturing audible sounds that are not perceived by the user. Thus, the device 110 may generate the ambient noise mask data 945/965 corresponding to the acoustic ambient noise perceived by the user, which the user may wish to capture or share, without including the mechanical noise and/or structural noise caused by the device 110. Additionally or alternatively, in some examples the device 110 may generate the residual echo mask data 970 to include the mechanical noise and/or structural noise, enabling the device 110 to further suppress or attenuate the mechanical noise and/or structural noise.

While the example illustrated in FIG. 1 illustrates the DNN component 126 sending the DNN output data 127 to the transmit-side post processing component(s) 128 for additional processing, the disclosure is not limited thereto. In some examples, the DNN component 126 may optionally send mask data, complex spectrogram data, and/or audio data to additional components without departing from the disclosure. For example, the DNN component 126 may send the speech mask data 920/940/960 to a voice activity detector (VAD) component (not illustrated) and the VAD component may use the speech mask data to perform VAD processing. Additionally or alternatively, the DNN component 126 may send the ambient noise mask data 945/965 to the CNG component 350 without departing from the disclosure. For example, the CNG component 350 may use the ambient noise mask data 945/965 to perform comfort noise generation (CNG) processing.

FIG. 10 illustrates an example component diagram for performing background noise passthrough according to embodiments of the present disclosure. In some examples, the device 110 may perform background noise passthrough 1000 in order to capture ambient sounds (e.g., background noise, environmental noise and/or the like) in an environment of the device 110. For example, during a communication session between the user 10 and a remote user, the user 10 may desire that the output audio data 355 capture target speech generated by the user 10 as part of a conversation. In addition, the user 10 may desire that the output audio data 355 capture other audible sounds, such as ambient noise and/or audible sounds generated by sound sources other than the user 10. For example, the user 10 may wish to share the environment with the remote user, enabling the remote user to listen to sounds of nature, a concert, family members or pets, and/or the like, although the disclosure is not limited thereto. Additionally or alternatively, the user 10 may be remote from the device 110 and may initiate a communication session with the device 110. As part of the communication session, the user 10 may desire that the output audio data 355 capture the environment, enabling the user 10 to listen to monitor the environment and hear ambient sounds, family members or pets, and/or the like.

As illustrated in FIG. 10, the device 110 may enable background noise passthrough 1000 using a DNN component 1010 configured to generate a speech mask 1020 (e.g., speech mask data) and a noise mask 1025 (e.g., noise mask data). In some examples the speech mask 1020 and/or the noise mask 1025 may correspond to complex spectrogram data, although the disclosure is not limited thereto. Similar to the output stage 550 described above, the device 110 may include a first combiner component 1030 configured to use the speech mask 1020 to generate an enhanced spectrogram 1035 (e.g., enhanced spectrogram data). For example, the first combiner component 1030 may combine the speech mask 1020 and the AEC-Out spectrogram 560 (e.g., AEC-Out real spectrogram 510 and AEC-Out imaginary spectrogram 512) to generate the enhanced spectrogram data (e.g., enhanced real spectrogram 570 and enhanced imaginary spectrogram 575), although the disclosure is not limited thereto.

In addition, the device 110 may include a second combiner component 1040 configured to use the noise mask 1025 to generate a noise spectrogram 1045 (e.g., noise spectrogram data). For example, the second combiner component 1030 may combine the noise mask 1025 and the AEC-Out spectrogram 560 (e.g., AEC-Out real spectrogram 510 and AEC-Out imaginary spectrogram 512) to generate noise spectrogram data (e.g., noise real spectrogram and noise imaginary spectrogram), although the disclosure is not limited thereto.

In some examples, the device 110 may use passthrough coefficient data 1005 to control an amount of environmental noise included in the output audio data 355. For example, the device 110 may include a third combiner component 1050 that may apply the passthrough coefficient data 1005 to the noise spectrogram 1045 to generate attenuated noise spectrogram 1055 (e.g., attenuated noise spectrogram data), with an amount of attenuation indicated by the passthrough coefficient data 1005.

In some examples, the passthrough coefficient data 1005 may correspond to a single value that is applied uniformly to each frequency index. For example, the passthrough coefficient data 1005 may indicate a percentage (e.g., 70%) and the third combiner component 1050 may pass 70% of the noise spectrogram 1045 (e.g., attenuate 30%). However, the disclosure is not limited thereto, and in other examples the passthrough coefficient data 1005 may vary based on frequency index. Thus, instead of being uniform across frequency index, the passthrough coefficient data 1005 may correspond to a vector that includes a plurality of passthrough coefficient values without departing from the disclosure. For example, the passthrough coefficient data 1005 may enable the device 110 to selectively pass certain frequency ranges associated with audible sounds of interest (e.g., speech, environmental noises, etc.) without departing from the disclosure.

As illustrated in FIG. 10, a fourth combiner component 1060 may combine the enhanced spectrogram 1035 and the attenuated noise spectrogram 1055 to generate an output spectrogram 1065 (e.g., output spectrogram data) representing the target speech and the desired environmental sounds. While not illustrated in FIG. 10, the device 110 may generate the output audio data 355 using the output spectrogram 1065.

As described above, FIGS. 5-10 illustrate examples of a DNN component 520 that uses an audio encoder/decoder network, and the corresponding description goes into detail about how this audio-only DNN solution is configured to process audio input signal(s) to generate an enhanced speech signal. For example, FIG. 6 illustrates that the DNN component 520 may use an encoder-decoder structure, with skip connections connecting convolutional layers in an encoder 620 with corresponding convolutional layers in a decoder 630. Thus, the encoder 620 may receive first complex spectrogram data corresponding to the AEC output data 314 and the decoder 630 may generate speech mask data that an output stage 550 may use to generate second complex spectrogram data corresponding to the enhanced speech signal.

In contrast to the audio-only DNN solution described with regard to FIGS. 5-10, the DNN component 126 is configured to perform audio-visual target speech enhancement. For example, the DNN component 126 may perform speech enhancement using a combination of both audio input signal(s) and image data 125 without departing from the disclosure. Jointly processing a combination of the audio input signals and the image data 125 enables the DNN component 126 to make use of both audio and visual modalities to determine which voice corresponds to target speech (e.g., desired speaker) and which voice corresponds to interference (e.g., interfering speaker). For example, the DNN component 126 makes use of a correlation between (i) lip movement and/or facial expressions (e.g., visual component) and (ii) the audio signal (e.g., audio component) in order to enhance the target speech associated with a face represented in the image data 125 (e.g., face in front of the camera), while suppressing all other sound components represented in the microphone signal.

While not identical, the audio encoder/decoder network described with regard to FIGS. 11A-11B may be adapted from the audio-only DNN solution described above with regard to FIGS. 5-10 without departing from the disclosure. Similarly, the video encoder/decoder network described with regard to FIGS. 11A-11B may also be adapted from the audio-only DNN solution described above, although parameters may vary between the audio encoder/decoder network and the video encoder/decoder network. For example, the video encoder/decoder network may be composed similar to the audio encoder/decoder network, except that the audio encoder/decoder network may perform two-dimensional (2D) convolutions while the video encoder/decoder network may instead perform three-dimensional (3D) convolutions, although the disclosure is not limited thereto.

FIGS. 11A-11B illustrate example component diagrams for performing audio-visual target speech enhancement according to embodiments of the present disclosure. As described above, the DNN component 126 may include both an audio encoder/decoder network and a video encoder/decoder network, which may be jointly trained to perform speech enhancement. In some examples, the DNN component 126 may also include a fusion network that is configured to receive individual feature data from the encoder networks and output combined feature data to the decoder networks. For example, FIG. 11A illustrates an example of a deep learning system 1100 that includes an audio encoder network 1120 and an audio decoder network 1150 (collectively, an audio encoder/decoder network), a video encoder network 1130 and a video decoder network 1160 (collectively, a video encoder/decoder network), and a fusion network 1140 located between the encoder/decoder networks.

As illustrated in FIG. 11A, the audio encoder network 1120 may receive noisy audio input signal(s) (e.g., noisy spectrogram data 1110) and may generate audio feature data 1125, which is output to the fusion network 1140. For example, similar to the encoder 620 described above with regard to FIG. 6, the audio encoder network 1120 may include a first plurality of convolutional layers that may be configured to process the noisy audio input signal(s) to extract a plurality of audio features corresponding to the noisy audio input signal(s).

As used herein, the plurality of audio features (e.g., audio feature data 1125) may be referred to as feature data, feature maps, embeddings, and/or the like interchangeably without departing from the disclosure. For example, the audio encoder network 1120 may be trained to produce embeddings that enable the audio decoder network 1150 to distinguish between individual voices, reduce noise, suppress residual echo, and/or attenuate other undesired audio components (e.g., echoes and/or noise) to further enhance target speech. Thus, the plurality of audio features may represent characteristics associated with the audio input signal(s), although the disclosure is not limited thereto.

As illustrated in FIG. 11A, in some examples the input to the audio encoder network 1120 may include a first complex-valued spectrogram (e.g., noisy spectrogram data 1110) that corresponds to the AEC output data 314. For example, the audio encoder network 1120 may be configured to process two input channels, similar to the example described above with regard to FIG. 6 (e.g., AEC-Out real spectrogram 510 and AEC-Out imaginary spectrogram 512). The disclosure is not limited thereto, however, and in other examples the input to the audio encoder network 1120 may also include a second complex-valued spectrogram without departing from the disclosure. For example, the second complex-value spectrogram may correspond to the echo estimate data 312, such that the audio encoder network 1120 may be configured to process four input channels, which include the AEC-Out real spectrogram 510 and the AEC-Out imaginary spectrogram 512 described above along with an echo-estimate real spectrogram and an echo-estimate imaginary spectrogram that correspond to the echo estimate data 312.

The disclosure is not limited thereto, however, and the first complex-value spectrogram and/or the second complex-value spectrogram may correspond to the microphone audio data 302 and/or the reference audio data 304 without departing from the disclosure. Additionally or alternatively, the audio encoder network 1120 may also receive additional data 320, as described in greater detail above with regard to FIG. 4B, without departing from the disclosure.

As illustrated in FIG. 11A, the video encoder network 1130 may receive noisy video input signal(s) (e.g., noisy image data 1115) and may generate image feature data 1135, which is output to the fusion network 1140. For example, similar to the encoder 620 described above with regard to FIG. 6, the video encoder network 1130 may include a second plurality of convolutional layers that may be configured to process the noisy video input signal(s) to extract a plurality of image features corresponding to the noisy video input signal(s).

As used herein, the plurality of image features (e.g., image feature data 1135) may be referred to as feature data, feature maps, embeddings, and/or the like interchangeably without departing from the disclosure. For example, the video encoder network 1130 may be trained to produce embeddings that assist the audio decoder network 1150 in distinguishing between individual voices, reducing noise, suppressing residual echo, and/or attenuating other undesired audio components (e.g., echoes and/or noise) to further enhance target speech. Thus, the plurality of image features may represent characteristics associated with the video input signal(s), although the disclosure is not limited thereto.

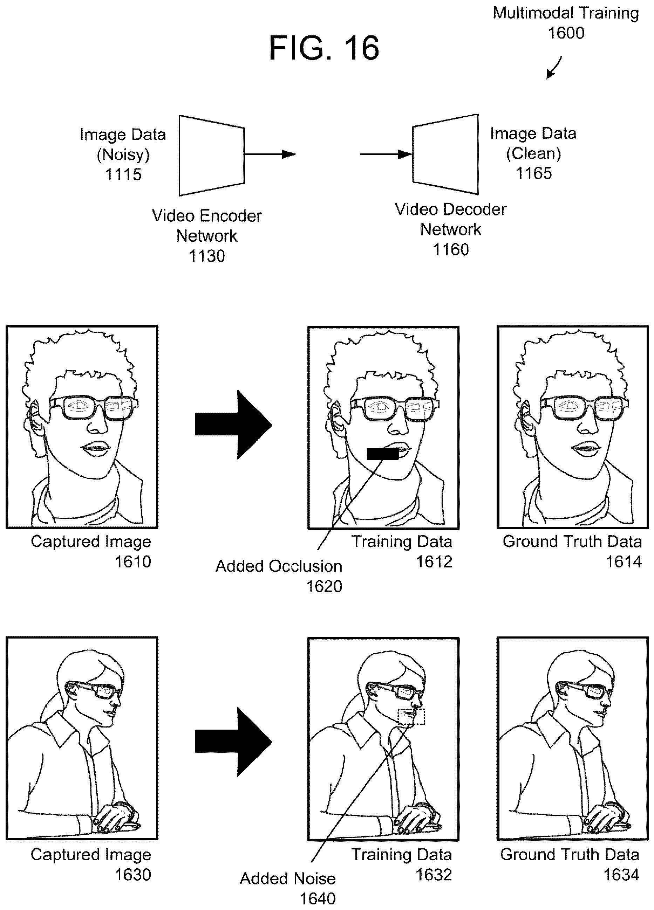

While the example described above refers to the video encoder network 1130 being trained to produce embeddings that assist the audio decoder network 1150, the disclosure is not limited thereto. In addition, the video encoder network 1130 may be trained to produce embeddings that assist the video decoder network 1160 in reducing noise (e.g., image noise) as part of generating clean image data, which will be described in greater below with regard to FIG. 16. However, the device 110 does not output the clean image data as part of the communication session, and the primary reason for including the video encoder/decoder network is to improve the target speech enhancement by making use of both audio and visual modalities.

As illustrated in FIG. 11A, the fusion network 1140 may be located between the encoder/decoder networks and may be configured to receive individual feature data from the encoder networks and output combined feature data to the decoder networks. For example, the fusion network 1140 may receive the audio feature data 1125 generated by the audio encoder network 1120, may receive the image feature data 1135 generated by the video encoder network 1130, and may process both the audio feature data 1125 and the image feature data 1135 to generate fused feature data 1145.

Thus, the combination of the audio encoder network 1120, the video encoder network 1130, and the fusion network 1140 generates and constricts the embeddings, fuses the embeddings to generate fused embeddings, processes the fused embeddings through a nonlinearity (e.g., propagates the fused embeddings through neural network layers such as a RNN, LSTM, GRU, fully-connected network, etc.), and then generates a final embedding. The final embedding (e.g., fused feature data 1145) is then decoded separately by the audio decoder network 1150 and the video decoder network 1160.

As illustrated in FIG. 11A, the deep learning system 1100 may implement an encoder/decoder architecture that includes skip connections between each encoder/decoder pair, similar to the skip connections described above with regard to FIG. 6. As described above with regard to FIG. 6, for example, the DNN component 520 may use an encoder-decoder structure, with skip connections connecting convolutional layers in an encoder 620 with corresponding convolutional layers in a decoder 630. Thus, the skip connections enable the DNN component 520 to update weights properly during back propagation, as without the skip connections the gradient layers vanish and the weights may not be updated properly.

As illustrated in FIG. 11A, the deep learning system 1100 may include first skip connections 1122 between the audio encoder network 1120 and the audio decoder network 1150, as well as second skip connections 1132 between the video encoder network 1130 and the video decoder network 1160. For example, the first skip connections 1122 may connect convolutional layers in the audio encoder network 1120 with corresponding convolutional layers in the audio decoder network 1150. Similarly, the second skip connections 1132 may connect convolutional layers in the video encoder network 1130 with corresponding convolutional layers in the video decoder network 1160. The disclosure is not limited thereto, however, and the deep learning system 1100 may include (i) no skip connections, (ii) only the first skip connections 1122, (iii) only the second skip connections 1132, or (iv) both the first skip connections 1122 and the second skip connections 1132 without departing from the disclosure.

As illustrated in FIG. 11B, in some examples the device 110 may also include skip connections between the audio encoder network 1120 and the video encoder network 1130 without departing from the disclosure. For example, these skip connections may enable the audio encoder network 1120 and the video encoder network 1130 to exchange information in an early fusion stage, providing insight and/or improving collaboration between the two.

As illustrated in FIG. 11B, a deep learning system 1170 may include skip connections 1175 between the audio encoder network 1120 and the video encoder network 1130. These skip connections 1175 may correspond to a gated information exchange, which enables the deep learning system 1170 to take information from the audio encoder network 1120 and apply it as a gate to the video encoder network 1130, or vice versa. For example, the video encoder network 1130 may receive some intermediate embedding from the audio encoder network 1120 and may multiply the intermediate embedding with a scalar value as part of generating the image feature data, although the disclosure is not limited thereto.

In the example illustrated in FIG. 11B, the skip connections 1175 are represented as being bidirectional. For example, FIG. 11B illustrates a first arrow extending from the audio encoder network 1120 to the video encoder network 1130 and a second arrow extending from the video encoder network 1130 to the audio encoder network 1120. In this example, both the audio encoder network 1120 and the video encoder network 1130 may receive intermediate embeddings and perform additional processing using the intermediate embeddings. The disclosure is not limited thereto, however, and the skip connections 1175 may be unidirectional without departing from the disclosure. Thus, the skip connections 1175 may be (i) unidirectional from the audio encoder network 1120 to the video encoder network 1130, (ii) unidirectional from the video encoder network 1130 to the audio encoder network 1120, or (iii) bidirectional without departing from the disclosure.

As illustrated in FIGS. 11A-11B, the fusion network 1140 may separately output the fused feature data 1145 to both the audio decoder network 1150 and the video decoder network 1160. For example, the audio decoder network 1150 may process the fused feature data 1145 to generate clean spectrogram data 1155 corresponding to the target speech. Separately, the video decoder network 1160 may process the fused feature data 1145 to generate clean image data 1165, as described in greater detail below with regard to FIG. 16.

In some examples, the deep learning system 1100/1170 may include a single audio decoder network 1150 configured to enhance the target speech. The disclosure is not limited thereto, and in other examples the deep learning system 1100/1170 may include two or more audio decoder networks without departing from the disclosure. For example, including two or more audio decoder networks may enable the device 110 to enhance primary speech and secondary speech, as described in greater detail below with regard to FIGS. 15A-15B.

As described above, the DNN component 126 is configured to perform audio-visual target speech enhancement. For example, the DNN component 126 may perform speech enhancement using a combination of audio input signal(s) and the image data 125 without departing from the disclosure. Thus, the DNN component 126 includes both an audio encoder/decoder network and a video encoder/decoder network that may be jointly trained to perform speech enhancement. For example, the audio encoder network and the video encoder network may be jointly trained to produce embeddings that enable the audio decoder network to distinguish between individual voices, reduce noise, suppress residual echo, and/or attenuate other undesired audio components (e.g., echoes and/or noise) to further enhance target speech.

As described in greater detail above, the device 110 may train the DNN component 126 using training data, which includes a noisy signal (e.g., input data) and a clean signal (e.g., output data) for both the audio encoder/decoder network and the video encoder/decoder network. For example, the training data may include a noisy audio signal and a clean audio signal associated with the audio encoder/decoder network, as well as a noisy image signal and a clean image signal associated with the video encoder/decoder network.

During end-to-end training, the noisy audio signal is input to the audio encoder network 1120 while a corresponding noisy image signal is input to the video encoder network 1130. The deep learning system 1100/1170 then processes the noisy audio signal and the noisy image signal to generate fused feature data 1145, which is separately input to both the audio decoder network 1150 and the video decoder network 1160. For example, the audio decoder network 1150 may be configured to process the fused feature data 1145 to generate the clean spectrogram data 1155, which is then compared to the clean audio signal included in the training data. Separately, the video decoder network 1160 may be configured to process the fused feature data 1145 to generate the clean image data 1165, which is then compared to the clean image signal included in the training data.

During training, the deep learning system 1100/1170 is configured to minimize a first error (e.g., difference) between the clean spectrogram data 1155 and the clean audio signal, along with a second error (e.g., difference) between the clean image data 1165 and the clean image signal. By minimizing these errors, the deep learning system 1100/1170 adjusts parameters and identifies which features are important for performing the speech enhancement.

While the DNN component 126 includes the video decoder network 1160, which is configured to generate the clean image data 1165, the device 110 only sends the enhanced speech signal during a communication session. Thus, the device 110 does not typically need to generate the clean image data 1165 during normal operation. Instead, the main benefit from including the video encoder/decoder network is improving how the video encoder network 1130 generates the image feature data 1135.

In some examples, the training data used to train the DNN component 126 may include additional noise and/or occlusions in a lip region of a face represented in the image, as described in greater detail below with regard to FIG. 16. For example, adding this additional noise (e.g., speckle noise) and/or occlusions may force the DNN component 126 to focus on the lip region, which helps teach the DNN component 126 which features are important and/or associated with the desired speech. Thus, as the DNN component 126 is cleaning up the added noise, the DNN component 126 is also learning embedding in a way that not only helps remove the noise from the image, but also helps perform speech enhancement tailored to the lips that are moving.

As described above, the DNN component 126 is configured to perform audio-visual target speech enhancement. For example, the DNN component 126 may perform speech enhancement using a combination of audio input signal(s) and the image data 125 without departing from the disclosure.

While not identical, the audio encoder/decoder network described with regard to FIGS. 11A-11B may be adapted from the audio-only DNN solution described above with regard to FIGS. 5-10 without departing from the disclosure. Similarly, the video encoder/decoder network described with regard to FIGS. 11A-11B may also be adapted from the audio-only DNN solution described above, although parameters may vary between the audio encoder/decoder network and the video encoder/decoder network. For example, the video encoder/decoder network may be composed similar to the audio encoder/decoder network, except that the audio encoder/decoder network may perform two-dimensional (2D) convolutions while the video encoder/decoder network may instead perform three-dimensional (3D) convolutions.

In the examples illustrated in FIGS. 1 and 3A-4B, the DNN component 126 is configured to process a combination of audio input signals and image data 125. Similarly, FIGS. 11A-11B illustrate examples in which the video encoder network 1130 receives noisy image data 1115. However, the disclosure is not limited thereto, and in some examples the DNN component 126 and/or the video encoder network 1130 may receive additional information associated with the image data 125 without departing from the disclosure. For example, the device 110 may process the image data 125 to generate facial landmark data, which represents a plurality of facial landmarks associated with a face represented in the image data 125, and the DNN component 126 may process both the image data 125 and the facial landmark data. Thus, the image data 125 and/or the facial landmark data may be input to the video encoder network 1130 described above with regard to FIGS. 11A-11B.

In some examples, the device 110 may be configured to perform face recognition (FR), which may include facial landmark detection, face embedding, and/or additional steps. For example, the device 110 may process the image data 125 to detect whether a face is represented in the image data 125 and/or how many faces are represented. In some examples, the device 110 may generate bounding boxes associated with each of the faces represented in the image data 125 and may optionally generate cropped image data corresponding to the bounding boxes. Thus, the device 110 may use the bounding boxes and/or the cropped image data to perform facial landmark detection to determine the facial landmark data. For example, the facial landmark data may include two-dimensional positions of facial landmarks, and may optionally include a confidence score indicating a likelihood that the 2D position corresponds to the facial landmark.

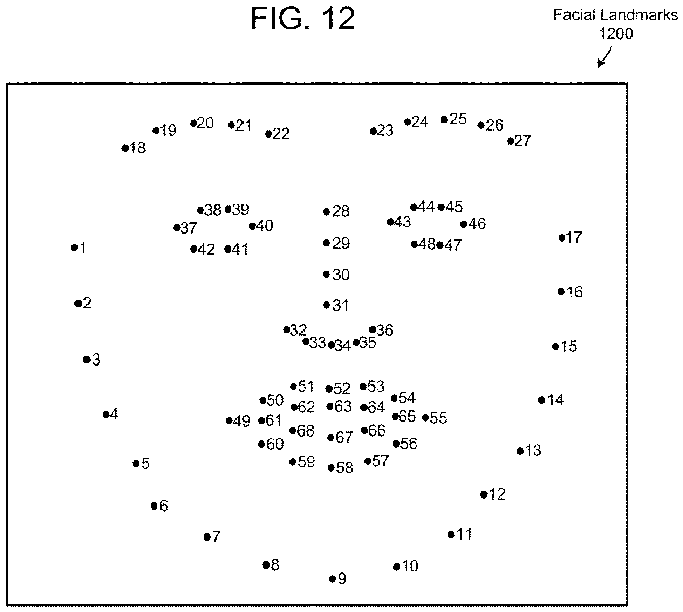

FIG. 12 illustrates an example of facial landmarks according to embodiments of the present disclosure. As illustrated in FIG. 12, the device 110 may process the image data 125 and perform facial landmark detection to detect a plurality of facial landmarks 1200 corresponding to a face represented in the image data 125. For example, FIG. 12 illustrates an example in which the device 110 is configured to detect a total of 68 facial landmarks 1200, although the disclosure is not limited thereto. Thus, the device 110 may be configured to generate facial landmark data that represents a two-dimensional (2D) position for the plurality of facial landmarks 1200 (e.g., 68 separate keypoints). However, the disclosure is not limited thereto, and the facial landmark data may represent a three-dimensional (3D) position for the plurality of facial landmarks 1200 without departing from the disclosure. Additionally or alternatively, while FIG. 12 illustrates an example of 68 facial landmarks 1200, the disclosure is not limited thereto and the exact number may vary without departing from the disclosure.

In some examples, the facial landmark data is generated and processed separately from the image data 125. For example, the device 110 may process the image data 125 to generate the facial landmark data, which can be sent and/or stored independently from the image data 125. The disclosure is not limited thereto, however, and in other examples the facial landmark data may be included as part of the image data 125 without departing from the disclosure. For example, the device 110 may embed the facial landmark data within the image data 125, may include the facial landmark data as feature data associated with the image data 125, and/or the like. For ease of illustration, reference to the image data 125 may refer to both the image data 125 itself or a combination of the image data 125 and the facial landmark data without departing from the disclosure.

While the deep learning systems 1100/1170 shown in FIGS. 11A-11B illustrates an example of the video encoder network 1130 processing the image data 125, this is intended to conceptually illustrate a broad example and the image data 125 may correspond to any type of image data and/or may include additional information, such as the facial landmark data, without departing from the disclosure.

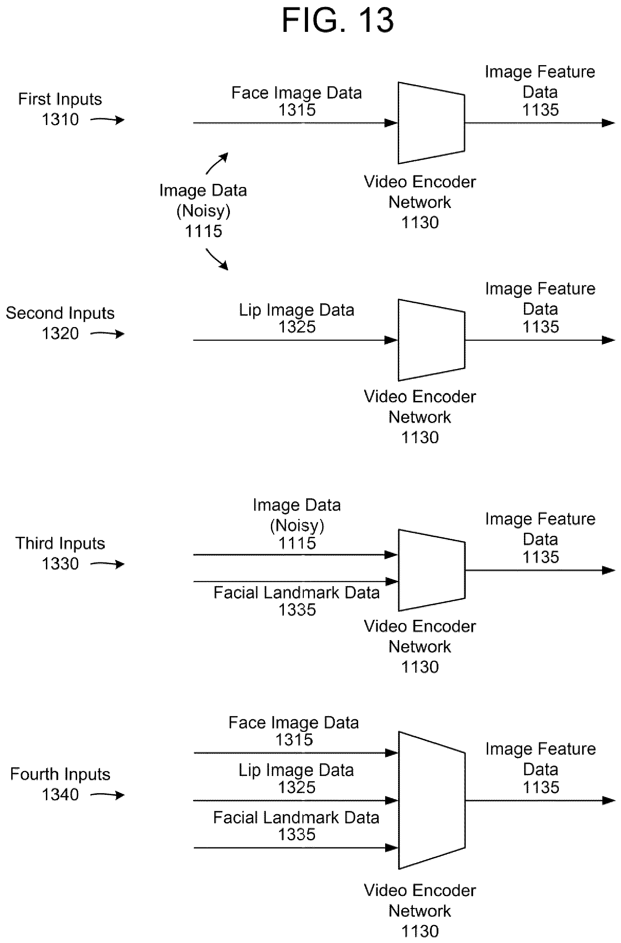

FIG. 13 illustrates examples of inputs to a video encoder network according to embodiments of the present disclosure. As illustrated in FIG. 13, video input signals processed by the video encoder network 1130 may vary without departing from the disclosure. For example, the video encoder network 1130 may process first image data representing a face of a user (e.g., face image data 1315), second image data representing lips of a user (e.g., lip image data 1325), facial landmark data 1335 representing a plurality of facial landmarks associated with the user's face, additional image data (not illustrated), and/or any combination thereof without departing from the disclosure.

As illustrated in FIG. 13, in some examples the video encoder network 1130 may receive first inputs 1310, such as face image data 1315 representing a face of the user, and the video encoder network 1130 may be configured to process the first inputs 1310 to generate the image feature data 1135. For example, the video encoder network 1130 may process the face image data 1315 using a plurality of convolutional layers to extract a plurality of image features (e.g., produce embeddings), as described in greater detail above.

In other examples, the video encoder network 1130 may receive second inputs 1320, such as lip image data 1325 representing lips of the user, and the video encoder network 1130 may be configured to process the second inputs 1320 to generate the image feature data 1135. For example, the video encoder network 1130 may process the lip image data 1325 using a plurality of convolutional layers to extract a plurality of image features (e.g., produce embeddings).

As indicated in FIG. 13, the noisy image data 1115 may correspond to the face image data 1315, the lip image data 1325, and/or both the face image data 1315 and the lip image data 1325 without departing from the disclosure. Also, as described in greater detail above with regard to FIG. 12, in some examples the device 110 may process the noisy image data 1115 to generate facial landmark data 1335, which may represent a plurality of facial landmarks associated with the user's face.

As illustrated in FIG. 13, in some examples the video encoder network 1130 may receive third inputs 1330, such as the noisy image data 1115 and the facial landmark data 1335, and the video encoder network 1130 may be configured to process the third inputs 1330 to generate the image feature data 1135. For example, the video encoder network 1130 may process the noisy image data 1115 and the facial landmark data 1335 using a plurality of convolutional layers to extract a plurality of image features (e.g., produce embeddings).

Finally, in some examples the video encoder network 1130 may receive fourth inputs 1340, such as the face image data 1315, the lip image data 1325, and the facial landmark data 1335, and the video encoder network 1130 may be configured to process the fourth inputs 1340 to generate the image feature data 1135. For example, the video encoder network 1130 may process the face image data 1315, the lip image data 1325, and the facial landmark data 1335 using a plurality of convolutional layers to extract a plurality of image features (e.g., produce embeddings).

While not illustrated in FIG. 13, the video encoder network 1130 may also receive and process additional data 320, as described in greater detail above with regard to FIG. 4B.

As described above, in some examples the facial landmark data 1335 may be separate from the image data 125, while in other examples the facial landmark data 1335 may be included as part of the image data 125 without departing from the disclosure. For example, the device 110 may embed the facial landmark data 1335 within the image data 125, may include the facial landmark data 1335 as feature data associated with the image data 125, and/or the like, although the disclosure is not limited thereto.

In order to explicitly illustrate individual inputs to the video encoder network 1130, FIG. 13 distinguishes between the noisy image data 1115 and the facial landmark data 1335. For example, the third inputs 1330 illustrate the facial landmark data 1335 separately from the noisy image data 1115, while the fourth inputs 1340 separately illustrate the face image data 1315, the lip image data 1325, and the facial landmark data 1335. However, the disclosure is not limited thereto, and in some examples the noisy image data 1115 may include the facial landmark data 1335 without departing from the disclosure. For example, the device 110 may embed the facial landmark data 1335 within the noisy image data 1115, may include the facial landmark data 1335 as feature data associated with the noisy image data 1115, and/or the like. Thus, reference to the noisy image data 1115 may refer to the noisy image data 1115 itself or a combination of the noisy image data 1115 and the facial landmark data 1335 without departing from the disclosure.

As described above, the fusion network 1140 may be located between the encoder/decoder networks and may be configured to receive individual feature data from the encoder networks and output combined feature data to the decoder networks. For example, the fusion network 1140 may receive the audio feature data 1125 generated by the audio encoder network 1120, may receive the image feature data 1135 generated by the video encoder network 1130, and may process both the audio feature data 1125 and the image feature data 1135 to generate fused feature data 1145. Thus, the combination of the audio encoder network 1120, the video encoder network 1130, and the fusion network 1140 generates and constricts the embeddings, fuses the embeddings to generate fused embeddings, processes the fused embeddings through a nonlinearity (e.g., propagates the fused embeddings through neural network layers such as a RNN, LSTM, GRU, fully-connected network, etc.), and then generates a final embedding. The final embedding (e.g., fused feature data 1145) is then decoded separately by the audio decoder network 1150 and the video decoder network 1160.

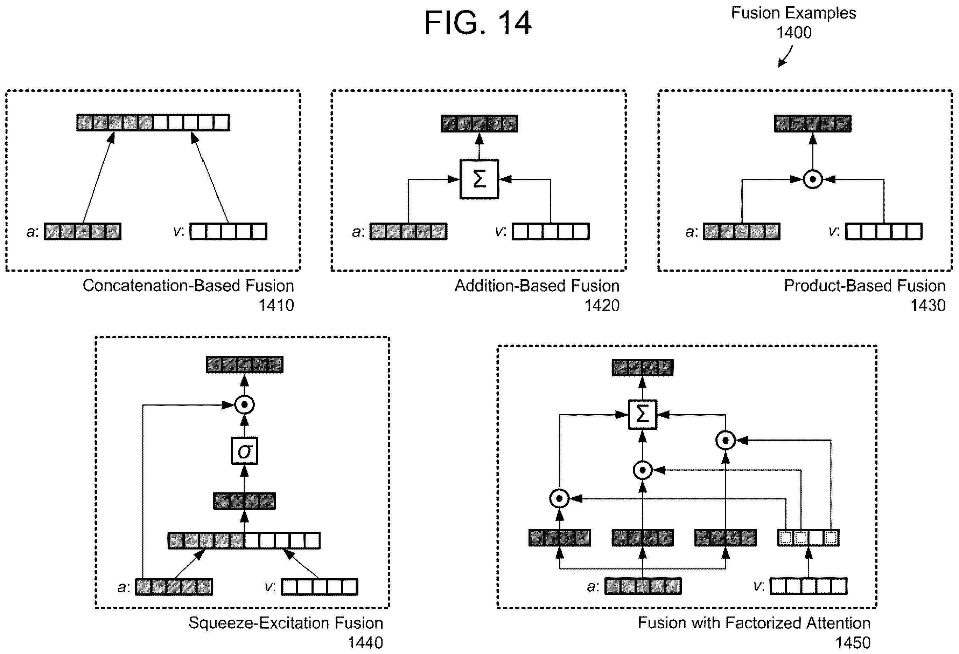

FIG. 14 illustrates examples of fusing features according to embodiments of the present disclosure. As illustrated in FIG. 14, there are multiple ways that the fusion network 1140 may combine the audio feature data 1125 and the image feature data 1135 to generate the fused feature data 1145 without departing from the disclosure. For example, FIG. 14 includes fusion examples 1400 that conceptually illustrate five different implementations of the fusion network 1140. Thus, in some examples the fusion network 1140 may generate the fused feature data 1145 by performing a concatenation-based fusion 1410, an addition-based fusion 1420, a product-based fusion 1430, a squeeze-excitation fusion 1440, and/or by performing fusion with factorized attention 1450. However, the disclosure is not limited thereto and the fusion network 1140 may correspond to an implementation not illustrated in FIG. 14 and/or a combination of multiple implementations without departing from the disclosure.

In the fusion examples 1400 illustrated in FIG. 14, the audio feature data 1125 input to the fusion network 1140 is represented by a first series of boxes (e.g., entries) having a first color (e.g., light gray) and a first label (e.g., "a:"), while the image feature data 1135 input to the fusion network 1140 is represented by a second series of boxes (e.g., entries) having a second color (e.g., white) and a second label (e.g., "v:").

For ease of illustration, the first series of boxes and the second series of boxes are represented using a first number of boxes (e.g., 5 boxes), which does not correspond to an actual dimension associated with either the audio feature data 1125 or the image feature data 1135. In addition, while FIG. 14 illustrates both the audio feature data 1125 and the image feature data 1135 using the first number of boxes, which might imply that they have the same dimensions, the disclosure is not limited thereto and in some examples first dimensions associated with the audio feature data 1125 and second dimensions associated with the image feature data 1135 may vary without departing from the disclosure.

Depending on each individual implementation, the fusion network 1140 may combine and/or modify the input audio feature values and the input image feature values to generate the fused feature data 1145. Thus, each of the fusion examples 1400 is illustrated with input feature values (e.g., audio feature data 1125 and image feature data 1135) along the bottom, output feature values (e.g., fused feature data 1145) along the top, and any intervening feature values in the middle.

If any of the intervening feature values and/or the output feature values remain unchanged from the input feature values originally received by the fusion network 1140, the coloring remains the same, such that first feature values corresponding to the original audio feature values are represented as the first color and second feature values corresponding to the original image feature values are represented as the second color. However, if the fusion network 1140 changes or modifies any of the intervening feature values and/or the output feature values from the input feature values originally received by the fusion network 1140, they are represented as a third color (e.g., dark gray) instead.

Referring to FIG. 14, in a first example the fusion network 1140 may generate the fused feature data 1145 by performing a concatenation-based fusion 1410. For example, the fusion network 1140 may combine the audio feature data 1125 and the image feature data 1135 by concatenating the image feature values to the audio feature values, such that the output feature values include each of the original input audio feature values and the original input image feature values. Thus, in the first example, the fused feature data 1145 output from the fusion network 1140 is represented as a combination of the first series of boxes and the second series of boxes. For example, if the audio feature data 1125 corresponds to a first number of boxes (e.g., first dimensions) and the image feature data 1135 corresponds to a second number of boxes (e.g., second dimensions), the fused feature data 1145 may correspond to a third number of boxes (e.g., third dimensions) equal to a sum of the first number and the second number.

In contrast, in a second example the fusion network 1140 may generate the fused feature data 1145 by performing an addition-based fusion 1420. For example, the fusion network 1140 may combine the audio feature data 1125 and the image feature data 1135 by summing corresponding feature values from the audio feature data 1125 and the image feature data 1135. To conceptually illustrate an example, the fusion network 1140 may add a first audio feature value (e.g., first entry in the audio feature data 1125) and a first image feature value (e.g., first entry in the image feature data 1135) to generate a first output feature value (e.g., first entry in the fused feature data 1145). Thus, in the second example the audio feature data 1125, the image feature data 1135, and the fused feature data 1145 correspond to the same dimensions (e.g., first number of boxes). As the output feature values reflect a combination of the audio feature values and the image feature values, they are represented in FIG. 14 using the third color (e.g., dark gray).

In a third example, the fusion network 1140 may generate the fused feature data 1145 by performing a product-based fusion 1430. For example, the fusion network 1140 may combine the audio feature data 1125 and the image feature data 1135 by multiplying corresponding feature values from the audio feature data 1125 and the image feature data 1135. To conceptually illustrate an example, the fusion network 1140 may multiply a first audio feature value (e.g., first entry in the audio feature data 1125) with a first image feature value (e.g., first entry in the image feature data 1135) to generate a first output feature value (e.g., first entry in the fused feature data 1145). Thus, similar to the second example described above, in the third example the audio feature data 1125, the image feature data 1135, and the fused feature data 1145 correspond to the same dimensions (e.g., first number of boxes). As the output feature values reflect a product of the audio feature values and the image feature values, they are represented in FIG. 14 using the third color (e.g., dark gray).

In a fourth example, the fusion network 1140 may generate the fused feature data 1145 by performing a squeeze-excitation fusion 1440. For example, the fusion network 1140 may combine the audio feature data 1125 and the image feature data 1135 by applying an attention mechanism that consists of three operations: expansion, squeeze, and excitation. As illustrated in FIG. 14, the expansion operation may be performed by combining the audio feature data 1125 and the image feature data 1135 using the concatenation operation described above with regard to the first example. Thus, a first intervening stage of the squeeze-excitation fusion 1440 corresponds to the output feature values of the concatenation-based fusion 1410, which is represented as a combination of the first series of boxes and the second series of boxes.

In the squeeze operation, the fusion network 1140 may "squeeze" the feature data by reducing a dimension associated with a second intervening stage. For example, an input stage of the fusion network 1140 is represented as two sets of a first number of boxes (e.g., 5 boxes for the audio feature values and 5 boxes for the image feature values), the first intervening stage is represented as a second number of boxes (e.g., 10 boxes), and the second intervening stage is represented using a third number of boxes (e.g., 4 boxes).

In some examples, the inputted feature maps may be passed to a global-average pooling (GAP) layer to generate channel-wise statistics, where each value is an average of the corresponding feature map. Thereafter, in the excitation operation, the fusion network 1140 may compute an appropriate weight for each feature map using the channel-wise statistics and/or fully connected (FC) layers. Thus, the fusion network 1140 may multiply the inputted feature maps by their weights to obtain the channel-weighted feature maps, although the disclosure is not limited thereto.

In the fourth example illustrated in FIG. 14, the step of multiplying the input feature maps by corresponding weight values is illustrated with regard to the audio feature values (e.g., audio feature data 1125) on the left, although the disclosure is not limited thereto. Thus, similar to the third example described above, in the fourth example the audio feature data 1125, the image feature data 1135, and the fused feature data 1145 correspond to the same dimensions (e.g., first number of boxes). As the output feature values reflect a product of the audio feature values and the channel-weighted feature maps, they are represented in FIG. 14 using the third color (e.g., dark gray).

Finally, in a fifth example the fusion network 1140 may generate the fused feature data 1145 by performing fusion with factorized attention 1450. For example, the fusion network 1140 may combine the audio feature data 1125 and the image feature data 1135 by performing a series of steps, with individual steps similar to the squeeze-excitation fusion 1440, the product-based fusion 1430, and/or the addition-based fusion 1420 described above.

As illustrated in FIG. 14, a first stage of the fusion network 1140 may perform an operation similar to the squeeze operation described above with regard to the squeeze-excitation fusion 1440. For example, the fusion network 1140 may reduce a dimension associated with a first intervening stage without departing from the disclosure. As illustrated in FIG. 14, the input stage is represented by two sets of boxes (e.g., audio feature values and image feature values), with each set having a first number of boxes (e.g., 5 boxes), while the first intervening stage is represents by four sets of boxes, with each set having a second number of boxes (e.g., 4 boxes).

In some examples, the fusion network 1140 may perform the dimension-reducing operation multiple times, such that each of the four sets of boxes correspond to different values. In the fifth example illustrated in FIG. 14, for example, the fusion network 1140 is shown performing this dimension-reducing operation three times using the audio feature values and once using the image feature values. However, this is intended to conceptually illustrate a simple example and the disclosure is not limited thereto. Instead, the fusion network 1140 may perform the dimension-reducing operation once for the image feature values, generating the far-right set of boxes having a third number of values (e.g., *n* boxes), while also performing the dimension-reducing operation a total of *n* times for the audio feature values, generating *n* columns (e.g., *n* sets of boxes).

Thus, each value represented in the far-right set of boxes may correspond to a weight value, and the fusion network 1140 may perform multiplication operations similar to the multiplication operation described above with regard to the product-based fusion 1430 for each column. For example, the fusion network 1140 may multiply a first weight value (e.g., first feature value in the far-right column of the first intervening stage, which corresponds to the image feature values) with first feature values (e.g., first column of the first intervening stage) generated from the audio feature values, may multiply a second weight value (e.g., second feature value in the fourth column of the first intervening stage) with second feature values (e.g., second column of the first intervening stage) generated from the audio feature values, and so on for each of the weight values and corresponding columns in the first intervening stage.

To generate the fused feature data 1145, the fusion network 1140 may perform a summing operation similar to the summing operation described above with regard to the addition-based fusion 1420. For example, the fusion network 1140 may sum individual entries in each of the columns to generate output feature values, such that the first feature values, the second feature values, and the output feature values include the same number of entries.

As described above, in order to apply the machine learning techniques, the machine learning processes themselves need to be trained. Training a machine learning component such as the DNN component 126 requires establishing a "ground truth" for the training examples. In machine learning, the term "ground truth" refers to the accuracy of a training set's classification for supervised learning techniques. Various techniques may be used to train the models including backpropagation, statistical learning, supervised learning, semi-supervised learning, stochastic learning, or other known techniques.

As will be described in greater detail below, the DNN component 126 may operate on one or more feature vectors that represent certain data that may be useful in distinguishing between target speech, interfering speech, and/or non-speech. For example, the device 110 may generate audio feature data and image feature data and the DNN component 126 may process a combination of the audio feature data and the image feature data as part of generating the DNN output data 127.

The DNN component 126 may be trained on many different examples of feature vectors that include both positive and negative training samples (e.g., samples that represent target speech, interfering speech, and/or non-speech) so that the DNN component 126 and/or other trained models of the device 110 may be capable of robustly detecting target speech and/or distinguishing the target speech from the interfering speech, although the disclosure is not limited thereto.

In some examples, the device 110 may be configured to generate two or more target speech signals without departing from the disclosure. For example, if two or more faces are represented in the image data 125, the device 110 may be configured to generate a target speech signal associated with each individual face. In some examples, a DNN and/or audio decoder configured to generate multiple target speech signals may be structured and/or trained differently than a DNN and/or audio decoder configured to generate a single target speech signal. Thus, if the device 110 detects two or more faces represented in the image data 125, the device 110 may select from multiple DNN components and/or audio decoders based on the number of faces detected.

FIGS. 15A-15B illustrate examples of audio decoder networks according to embodiments of the present disclosure. As illustrated in FIG. 15A, in some examples the device 110 may process the fused feature data 1145 using a unified decoder 1510 to generate a single output 1515 representing primary speech (e.g., target speech). For example, the unified decoder 1510 may correspond to a single audio decoder network 1150a, which is configured to generate clean spectrogram data 1155a corresponding to the primary speech.

In some examples, the device 110 may select the unified decoder 1510 in response to only detecting a single face represented in the image data 125. The disclosure is not limited thereto, however, and in other examples the device 110 may be configured to select the unified decoder 1510 regardless of how many faces are represented in the image data 125. For example, the device 110 may select a portion of the image data 125 representing a single face and use this portion of the image data 125 to perform audio-visual target speech enhancement in order to generate enhanced speech corresponding to a particular user. Thus, the device 110 may associate all other users with interfering speech, which is attenuated in the DNN output data 127.

As illustrated in FIG. 15A, in other examples the device 110 may process the fused feature data 1145 using unified decoders 1520. For example, the unified decoders 1520 may correspond to a first audio decoder network 1150b-1 that is configured to generate a single output 1525a representing primary speech (e.g., target speech) and a second audio decoder network 1150b-2 that is configured to generate dual outputs 1525b, which represent either primary speech or secondary speech.

If the device 110 includes the unified decoders 1520, the device 110 may select between the first audio decoder network 1150b-1 or the second audio decoder network 1150b-2 based on the desired number of speech signals, such that only one of the unified decoders 1520 is processing the fused feature data 1145 and generating the DNN output data 127. For example, if the device 110 only detects a single face represented in the image data 125, the device 110 may select the first audio decoder network 1150b-1 and the first audio decoder network 1150b-1 may generate clean spectrogram data 1155b-1. Alternatively, if the device 110 detects two faces represented in the image data 125, the device 110 may select the second audio decoder network 1150b-2 and the second audio decoder network 1150b-2 may generate clean spectrogram data 1155b-2 instead. The disclosure is not limited thereto, however, and in some examples the device 110 may select between three or more audio decoder networks without departing from the disclosure.

Instead of selecting between the unified decoders 1520, in some examples the device 110 may include separate decoders 1530, enabling the device 110 to select an additional audio decoder network as needed. For example, the device 110 may include a primary audio decoder network 1150c configured to generate first clean spectrogram data 1155c representing primary speech, which operates at all times. In addition, the device 110 may include a secondary audio decoder network 1150d, which is optional and configured to generate second clean spectrogram data 1155d representing secondary speech. Thus, if the device 110 detects a second face represented in the image data 125, the device 110 may generate dual outputs 1535 by sending the fused feature data 1145 to the secondary audio decoder network 1150d in addition to the primary audio decoder network 1150c. Similarly, if the device 110 detects a third face represented in the image data 125, the device 110 may send the fused feature data 1145 to an additional audio decoder network without departing from the disclosure.

In the examples illustrated in FIG. 15A, the device 110 may distinguish between multiple faces represented in the image data 125. For example, the device 110 may generate an enhanced speech signal individually for each face detected in the image data 125. Alternatively, the device 110 may select an individual face represented in the image data 125 and may generate enhanced speech corresponding only to speech associated with the selected face without departing from the disclosure. The disclosure is not limited thereto, however, and in other examples the device 110 may distinguish between desired speech, which is associated with visible faces, and undesired speech that is not. For example, the device 110 may generate a single enhanced speech signal corresponding to multiple faces represented in the image data 125, such that the multiple faces are treated as a single entity and all other speech is suppressed.

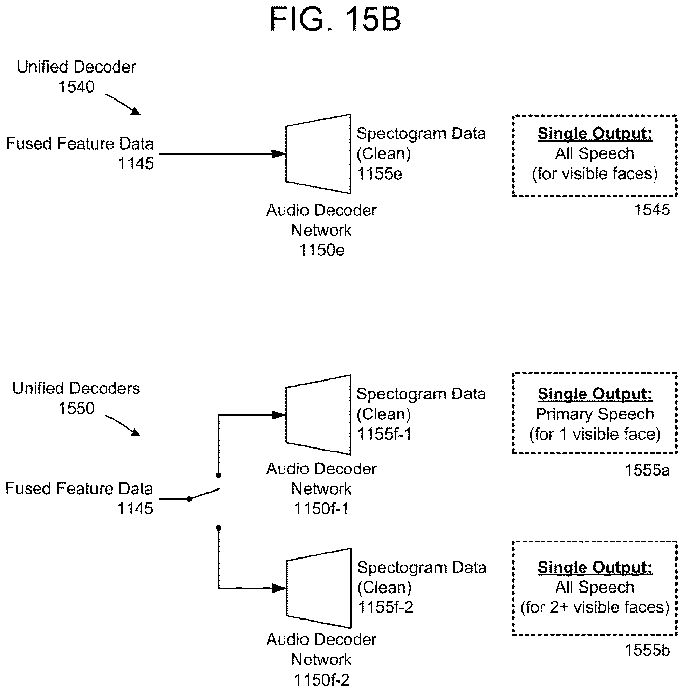

As illustrated in FIG. 15B, in some examples the device 110 may process the fused feature data 1145 using a unified decoder 1540 to generate a single output 1545 representing all speech (e.g., target speech for all visible faces). For example, the unified decoder 1540 may correspond to a single audio decoder network 1150e, which is configured to generate clean spectrogram data 1155e corresponding to the target speech regardless of how many faces are represented in the image data 125. Thus, the device 110 may perform audio-visual target speech enhancement in order to generate enhanced speech corresponding to every user represented in the image data 125, while treating all other speech as interfering speech, which is attenuated in the DNN output data 127.

As illustrated in FIG. 15B, in other examples the device 110 may process the fused feature data 1145 using unified decoders 1550. For example, the unified decoders 1550 may correspond to a first audio decoder network 1150f-1 that is configured to generate a single output 1555a representing primary speech (e.g., target speech for a single visible face) and a second audio decoder network 1150f-2 that is configured to generate dual outputs 1555b, which represent all speech (e.g., target speech for 2+ visible faces).

If the device 110 includes the unified decoders 1550, the device 110 may select between the first audio decoder network 1150f-1 or the second audio decoder network 1150f-2 based on the number of faces represented in the image data 125, such that only one of the unified decoders 1550 is processing the fused feature data 1145 and generating the DNN output data 127. For example, if the device 110 only detects a single face represented in the image data 125, the device 110 may select the first audio decoder network 1150f-1 and the first audio decoder network 1150f-1 may generate clean spectrogram data 1155f-1. Alternatively, if the device 110 detects two or more faces represented in the image data 125, the device 110 may select the second audio decoder network 1150f-2 and the second audio decoder network 1150f-2 may generate clean spectrogram data 1155f-2 instead.

As described above, the DNN component 126 is configured to perform audio-visual target speech enhancement. For example, the DNN component 126 may perform speech enhancement using a combination of audio input signal(s) and the image data 125 without departing from the disclosure. Thus, the DNN component 126 includes both an audio encoder/decoder network and a video encoder/decoder network that may be jointly trained to perform speech enhancement. For example, the audio encoder network and the video encoder network may be jointly trained to produce embeddings that enable the audio decoder network to distinguish between individual voices, reduce noise, suppress residual echo, and/or attenuate other undesired audio components (e.g., echoes and/or noise) to further enhance target speech.

As described in greater detail above, the device 110 may train the DNN component 126 using training data, which includes a noisy signal (e.g., input data) and a clean signal (e.g., output data) for both the audio encoder/decoder network and the video encoder/decoder network. For example, the training data may include a noisy audio signal and a clean audio signal associated with the audio encoder/decoder network, as well as a noisy image signal and a clean image signal associated with the video encoder/decoder network.

During end-to-end training, the noisy audio signal is input to the audio encoder network 1120 while a corresponding noisy image signal is input to the video encoder network 1130. The deep learning system 1100/1170 then processes the noisy audio signal and the noisy image signal to generate fused feature data 1145, which is separately input to both the audio decoder network 1150 and the video decoder network 1160. For example, the audio decoder network 1150 may be configured to process the fused feature data 1145 to generate the clean spectrogram data 1155, which is then compared to the clean audio signal included in the training data. Separately, the video decoder network 1160 may be configured to process the fused feature data 1145 to generate the clean image data 1165, which is then compared to the clean image signal included in the training data.

During training, the deep learning system 1100/1170 is configured to minimize a first error (e.g., difference) between the clean spectrogram data 1155 and the clean audio signal, along with a second error (e.g., difference) between the clean image data 1165 and the clean image signal. By minimizing these errors, the deep learning system 1100/1170 adjusts parameters and identifies which features are important for performing the speech enhancement.

While the DNN component 126 includes the video decoder network 1160, which is configured to generate the clean image data 1165, the device 110 only sends the enhanced speech signal during a communication session. Thus, the device 110 does not typically need to generate the clean image data 1165 during normal operation. Instead, the main benefit from including the video encoder/decoder network is improving how the video encoder network 1130 generates the image feature data 1135.

In some examples, the training data used to train the DNN component 126 may include additional noise and/or occlusions in a lip region of a face represented in the image. For example, adding this additional noise (e.g., speckle noise) and/or occlusions may force the DNN component 126 to focus on the lip region, which helps teach the DNN component 126 which features are important and/or associated with the desired speech. Thus, as the DNN component 126 is cleaning up the added noise, the DNN component 126 is also learning embedding in a way that not only helps remove the noise from the image, but also helps perform speech enhancement tailored to the lips that are moving.

FIG. 16 illustrates examples of multimodal training according to embodiments of the present disclosure. As illustrated in FIG. 16, the device 110 may be configured to perform multimodal training 1600 to train the video encoder network 1130 and the video decoder network 1160. While not illustrated in FIG. 16, the multimodal training 1600 also trains the audio encoder network 1120, the fusion network 1140, and the audio decoder network 1150. Thus, the entire deep learning system 1100/1170 is jointly trained, end-to-end, during the multimodal training 1600.

To force the deep learning system 1100/1170 to focus on the lip region of a face represented in the image data 125, the training data used during the multimodal training 1600 may include additional noise specifically in the lip region. As illustrated in FIG. 16, a first captured image 1610 may correspond to a clean image and may be used as ground truth data 1614 with which to train the system. However, the system 100 may process the first captured image 1610 to include an added occlusion 1620 as part of generating training data 1612. Thus, the video encoder network 1130 may receive the training data 1612, with the added occlusion 1620, instead of the first captured image 1610 itself.

To illustrate another example, a second captured image 1630 may correspond to a clean image and may be used as ground truth data 1634 with which to train the system. However, the system 100 may process the captured image 1630 to include additional noise 1640 in the lip region as part of generating training data 1632. Thus, the video encoder network 1130 may receive the training data 1632, with the additional noise 1640, instead of the captured image 1610 itself. Thus, the training data may cause the DNN component 126 to identify discriminatory features that assist the DNN component 126 in performing speech enhancement.

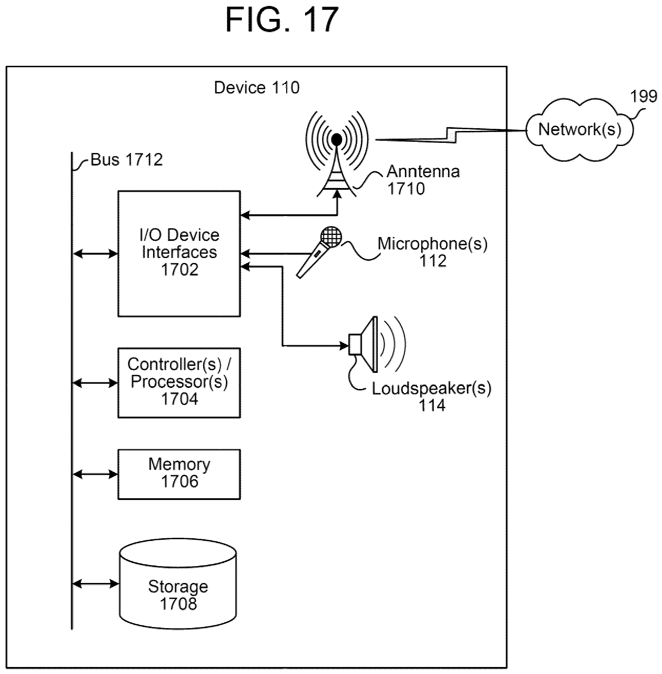

FIG. 17 is a block diagram conceptually illustrating example components of the system 100. In operation, the system 100 may include computer-readable and computer-executable instructions that reside on the system, as will be discussed further below. The system 100 may include one or more audio capture device(s), such as microphones 112. The audio capture device(s) may be integrated into a single device or may be separate. The system 100 may also include an audio output device for producing sound, such as loudspeaker(s) 114. The audio output device may be integrated into a single device or may be separate. The system 100 may include an address/data bus 1712 for conveying data among components of the system 100. Each component within the system may also be directly connected to other components in addition to (or instead of) being connected to other components across the bus 1712.

The system 100 may include one or more controllers/processors 1704 that may each include a central processing unit (CPU) for processing data and computer-readable instructions, and a memory 1706 for storing data and instructions. The memory 1706 may include volatile random-access memory (RAM), non-volatile read only memory (ROM), non-volatile magnetoresistive (MRAM) and/or other types of memory. The system 100 may also include a data storage component 1708, for storing data and controller/processor-executable instructions (e.g., instructions to perform operations discussed herein). The data storage component 1708 may include one or more non-volatile storage types such as magnetic storage, optical storage, solid-state storage, etc. The system 100 may also be connected to removable or external non-volatile memory and/or storage (such as a removable memory card, memory key drive, networked storage, etc.) through the input/output device interfaces 1702.

Computer instructions for operating the system 100 and its various components may be executed by the controller(s)/processor(s) 1704, using the memory 1706 as temporary "working" storage at runtime. The computer instructions may be stored in a non-transitory manner in non-volatile memory 1706, storage 1708, and/or an external device. Alternatively, some or all of the executable instructions may be embedded in hardware or firmware in addition to or instead of software.

The system may include input/output device interfaces 1702. A variety of components may be connected through the input/output device interfaces 1702, such as the loudspeaker(s) 114, the microphone(s) 112, and a media source such as a digital media player (not illustrated). The input/output interfaces 1702 may include A/D converters (not shown) and/or D/A converters (not shown).

The input/output device interfaces 1702 may also include an interface for an external peripheral device connection such as universal serial bus (USB), FireWire, Thunderbolt or other connection protocol. The input/output device interfaces 1702 may also include a connection, via an Ethernet port, an antenna 1710, or other component, to one or more networks 199, a wireless local area network (WLAN) (such as WiFi) radio, Bluetooth, and/or wireless network radio, such as a radio capable of communication with a wireless communication network such as a Long Term Evolution (LTE) network, WiMAX network, 3G network, etc. Through the network(s) 199, the system 100 may be distributed across a networked environment.

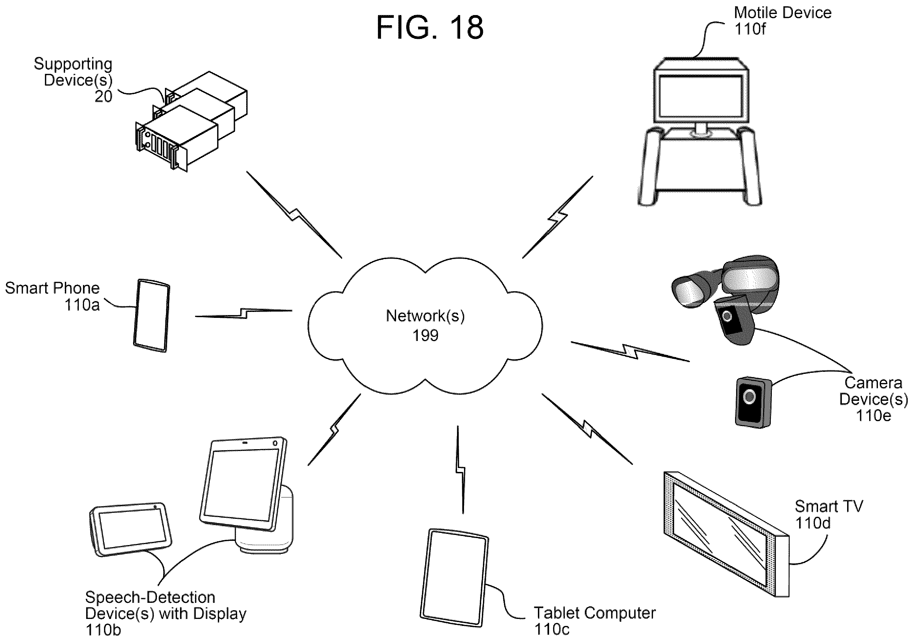

As illustrated in FIG. 18, multiple devices (110a-110f, 20) may contain components of the system and the devices may be connected over a network(s) 199. The network(s) 199 may include a local or private network or may include a wide network such as the Internet. Devices may be connected to the network(s) 199 through either wired or wireless connections. For example, a smart phone 110a, a speech-detection device with display 110b, a tablet computer 110c, a smart television (TV) 110d, camera device(s) 110e, a motile device 110f, and/or the like may be connected to the network(s) 199 through a wireless service provider, over a WiFi or cellular network connection, or the like. Other devices are included as network-connected support devices, such as a natural language command processing system associated with supporting device(s) 20 and/or others. The support devices may connect to the network(s) 199 through a wired connection or wireless connection. Networked devices may capture audio using one-or-more built-in or connected microphones or other audio capture devices, with processing performed by ASR components, NLU components, or other components of the same device or another device connected via the network(s) 199, such as an ASR component, an NLU component, etc. of the natural language command processing system associated with the supporting device(s) 20.

While FIG. 18 illustrates examples of multiple devices (110a-110d) that include one or more cameras, the disclosure is not limited thereto. In some examples, the device 110 may receive image data from another device 110, an external camera, and/or the like and may perform audio-visual target speech enhancement using the received image data without departing from the disclosure. Multiple devices may be employed in a single device 110. In such a multi-device device, each of the devices may include different components for performing different aspects of the processes discussed above. The multiple devices may include overlapping components. The components listed in any of the figures herein are exemplary, and may be included a stand-alone device or may be included, in whole or in part, as a component of a larger device or system.

The concepts disclosed herein may be applied within a number of different devices and computer systems, including, for example, general-purpose computing systems, server-client computing systems, mainframe computing systems, telephone computing systems, laptop computers, cellular phones, personal digital assistants (PDAs), tablet computers, video capturing devices, wearable computing devices (watches, glasses, etc.), other mobile devices, video game consoles, speech processing systems, distributed computing environments, etc. Thus the components, components and/or processes described above may be combined or rearranged, with the scope of the invention being defined by the appended claims. The functionality of any component described above may be allocated among multiple components, or combined with a different component. As discussed above, any or all of the components may be embodied in one or more general-purpose microprocessors, or in one or more special-purpose digital signal processors or other dedicated microprocessing hardware. One or more components may also be embodied in software implemented by a processing unit. Further, one or more of the components may be omitted from the processes entirely.

The above embodiments of the present disclosure are meant to be illustrative. They were chosen to explain the principles and application of the disclosure and are not intended to be exhaustive or to limit the disclosure. Many modifications and variations of the disclosed embodiments may be apparent to those of skill in the art. Persons having ordinary skill in the field of computers and/or digital imaging should recognize that components and process steps described herein may be interchangeable with other components or steps, or combinations of components or steps, and still achieve the benefits and advantages of the present disclosure. Moreover, it should be apparent to one skilled in the art, that the disclosure may be practiced without some or all of the specific details and steps disclosed herein.

Aspects of the disclosed system may be implemented as a computer method or as an article of manufacture such as a memory device or non-transitory computer readable storage medium. The computer readable storage medium may be readable by a computer and may comprise instructions for causing a computer or other device to perform processes described in the present disclosure. The computer readable storage medium may be implemented by a volatile computer memory, non-volatile computer memory, hard drive, solid-state memory, flash drive, removable disk and/or other media. Some or all of the fixed beamformer, acoustic echo canceller (AEC), adaptive noise canceller (ANC) unit, residual echo suppression (RES), double-talk detector, etc. may be implemented by a digital signal processor (DSP).

Embodiments of the present disclosure may be performed in different forms of software, firmware and/or hardware. Further, the teachings of the disclosure may be performed by an application specific integrated circuit (ASIC), field programmable gate array (FPGA), or other component, for example.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without author input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Conjunctive language such as the phrase "at least one of X, Y and Z," unless specifically stated otherwise, is to be understood with the context as used in general to convey that an item, term, etc. may be either X, Y, or Z, or a combination thereof. Thus, such conjunctive language is not generally intended to imply that certain embodiments require at least one of X, at least one of Y and at least one of Z to each is present.

As used in this disclosure, the term "a" or "one" may include one or more items unless specifically stated otherwise. Further, the phrase "based on" is intended to mean "based at least in part on" unless specifically stated otherwise.

## Claims

1. A computer-implemented method, the method comprising:
generating first audio using a loudspeaker and first audio data;
generating second audio data using at least one microphone of a device, the second audio data corresponding to audio captured by the at least one microphone, wherein the second audio data represents the first audio and first speech generated by a first user;
receiving, by the device, the second audio data;
receiving first image data representing the first user;
performing, using the second audio data and the first audio data, echo cancellation to generate third audio data and echo estimate data;
generating, using the third audio data and the echo estimate data, first complex spectrogram data corresponding to the second audio data; and
generating, by a trained deep neural network speech enhancement model which is configured to perform noise reduction and which is using the first image data and the first complex spectrogram data, fourth audio data representing the first speech, wherein generating the fourth audio data further comprises:
generating audio feature data using a first encoder component and the first complex spectrogram data,
generating image feature data using a second encoder component, the first image data, and intermediate feature data received from the first encoder component,
generating, using the audio feature data and the image feature data, first data, and
generating, using a first decoder component and the first data, the fourth audio data;
wherein the method further comprises performing, using the fourth audio data and the echo estimate data, residual echo cancellation to generate processed data.

2. The computer-implemented method of claim 1, wherein generating the fourth audio data further comprises:
generating, using the first decoder component and the first data, speech mask data; and
generating, using the speech mask data and the first complex spectrogram data, the fourth audio data.

3. The computer-implemented method of claim 1 or 2, further comprising:
generating, using a second decoder component and the first data, second image data representing the first user.

4. The computer-implemented method of claim 1 or 2, further comprising:
determining that two faces are represented in a portion of the first image data; and
generating, using a second decoder component and a portion of the first data corresponding to the portion of the first image data, fifth audio data representing second speech generated by a second user.

5. The computer-implemented method of claim 4, further comprising:
generating, using the second decoder component and the portion of the first data, sixth audio data representing the first speech.

6. The computer-implemented method of any preceding claim, wherein generating the first data further comprises:
generating first feature data by combining the audio feature data and the image feature data;
generating, using the first feature data, a plurality of weight values; and
generating the first data using the audio feature data and the plurality of weight values.

7. The computer-implemented method of any preceding claim, wherein the first encoder component is configured to perform two-dimensional (2D) convolution, while the second encoder component is configured to perform three-dimensional (3D) convolutional.

8. The computer-implemented method of any preceding claim, further comprising:
determining, using the first image data, landmark data indicating a plurality of facial landmarks associated with the first user,
wherein the image feature data is generated using the first image data, the intermediate feature data, and the landmark data.

9. The computer-implemented method of claim 1 or 2, further comprising, prior to receiving the second audio data:
receiving fifth audio data representing second speech generated by a second user;
receiving second image data representing at least a first image of the second user;
determining that a portion of lips associated with the second user are represented in a first region of the first image; and
generating, using the second image data, third image data representing at least a second image of the second user, wherein noise is added to a portion of the second image corresponding to the first region,
wherein the trained model is trained using the fifth audio data, the third image data, and the second image data.

10. A system comprising:
at least one processor; and
memory including instructions operable to be executed by the at least one processor to cause the system to:
generate first audio using a loudspeaker and first audio data;
generate second audio data using at least one microphone of a device, the second audio data corresponding to audio captured by the at least one microphone, wherein the second audio data represents the first audio and first speech generated by a first user;
receive, by the device, the second audio data;
receive first image data representing the first user;
performing, using the second audio data and the first audio data, echo cancellation to generate third audio data and echo estimate data;
generate, using the third audio data and the echo estimate data, first complex spectrogram data corresponding to the second audio data; and
generate, by a trained deep neural network speech enhancement model which is configured to perform noise reduction and which is using the first image data and the first complex spectrogram data, fourth audio data representing the first speech, wherein generating the fourth audio data further comprises:
generating image feature data using a first encoder component and the first image data,
generating audio feature data using a second encoder component, the first complex spectrogram data, and intermediate feature data received from the first encoder component,
generating, using the audio feature data and the image feature data, first data, and
generating, using a first decoder component and the first data, the fourth audio data;
wherein the memory further comprises instructions that, when executed by the at least one processor, further cause the system to perform, using the fourth audio data and the echo estimate data, residual echo cancellation to generate processed data.

11. The system of claim 10, wherein the memory further comprises instructions that, when executed by the at least one processor, further cause the system to:
generate, using the first decoder component and the first data, speech mask data; and
generate, using the speech mask data and the first complex spectrogram data, the fourth audio data.

12. The system of claim 10 or 11, wherein the memory further comprises instructions that, when executed by the at least one processor, further cause the system to:
generate, using a second decoder component and the first data, second image data representing the first user.

13. The system of claim 10 or 11, wherein the memory further comprises instructions that, when executed by the at least one processor, further cause the system to:
determine that two faces are represented in a portion of the first image data; and
generate, using a second decoder component and a portion of the first data corresponding to the portion of the first image data, fifth audio data representing second speech generated by a second user.

14. The system of claim 13, wherein the memory further comprises instructions that, when executed by the at least one processor, further cause the system to:
generate, using the second decoder component and the portion of the first data, sixth audio data representing the first speech.

## Patentansprüche

1. Ein computerimplementiertes Verfahren, das Verfahren, umfassend:
Erzeugen eines ersten Audiosignals unter Verwendung eines Lautsprechers und erster Audiodaten;
Erzeugen zweiter Audiodaten unter Verwendung mindestens eines Mikrofons eines Geräts, wobei die zweiten Audiodaten dem von dem mindestens einen Mikrofon erfassten Audiosignal entsprechen und das erste Audiosignal sowie die erste Sprache, die durch einen ersten Benutzer erzeugt wurden, darstellen;
Empfangen der zweiten Audiodaten durch das Gerät; Empfangen erster Bilddaten, die den ersten Benutzer darstellen;
Durchführen einer Echokompensation unter Verwendung der zweiten Audiodaten und der ersten Audiodaten, um dritte Audiodaten und Echoschätzungsdaten zu erzeugen;
Erzeugen erster komplexer Spektrogrammdaten unter Verwendung der dritten Audiodaten und der Echoschätzungsdaten, die den zweiten Audiodaten entsprechen; und
Erzeugen von vierten Audiodaten, die die erste Sprache darstellen, durch ein trainiertes tiefes neuronales Netzwerk-Sprachverbesserungsmodell, das zum Durchführen einer Rauschverminderung konfiguriert ist und die ersten Bilddaten sowie die ersten komplexen Spektrogrammdaten verwendet, wobei das Erzeugen der vierten Audiodaten ferner umfasst:
Erzeugen von Audiomerkmalsdaten unter Verwendung einer ersten Codiererkomponente und der ersten komplexen Spektrogrammdaten,
Erzeugen von Bild-Merkmalsdaten unter Verwendung einer zweiten Codiererkomponente, der ersten Bilddaten und von der ersten Codiererkomponente empfangener Zwischenmerkmalsdaten,
Erzeugen erster Daten unter Verwendung der Audiomerkmalsdaten und der Bildmerkmalsdaten sowie Erzeugen der vierten Audiodaten unter Verwendung einer ersten Decodiererkomponente und der ersten Daten;
wobei das Verfahren ferner das Durchführen einer Rest-Echokompensation unter Verwendung der vierten Audiodaten und der Echoschätzungsdaten umfasst, um verarbeitete Daten zu erzeugen.

2. Computerimplementiertes Verfahren nach Anspruch 1, wobei das Erzeugen der vierten Audiodaten ferner umfasst:
Erzeugen von Sprachmaskendaten unter Verwendung der ersten Decodiererkomponente und der ersten Daten; und
Erzeugen der vierten Audiodaten unter Verwendung der Sprachmaskendaten und der ersten komplexen Spektrogrammdaten.

3. Computerimplementiertes Verfahren nach Anspruch 1 oder 2, ferner umfassend:
Erzeugen von zweiten Bilddaten, die den ersten Benutzer darstellen, unter Verwendung einer zweiten Decodiererkomponente und der ersten Daten.

4. Computerimplementiertes Verfahren nach Anspruch 1 oder 2, ferner umfassend:
Feststellen, dass in einem Abschnitt der ersten Bilddaten zwei Gesichter dargestellt sind; und
Erzeugen von fünften Audiodaten, die eine von einem zweiten Benutzer erzeugte zweite Sprache darstellen, unter Verwendung einer zweiten Decodiererkomponente und eines Abschnitts der ersten Daten, der dem Abschnitt der ersten Bilddaten entspricht.

5. Computerimplementiertes Verfahren nach Anspruch 4, ferner umfassend:
Erzeugen, unter Verwendung der zweiten Decodiererkomponente und des Abschnitts der ersten Daten, sechster Audiodaten, die die erste Sprache darstellen.

6. Computerimplementiertes Verfahren nach Anspruch 1, wobei das Erzeugen der ersten Daten ferner umfasst:
Erzeugen erster Merkmalsdaten durch Kombinieren der Audiomerkmalsdaten und der Bildmerkmalsdaten;
Erzeugen einer Vielzahl von Gewichtungswerten unter Verwendung der ersten Merkmalsdaten; und
Erzeugen der ersten Daten unter Verwendung der Audiomerkmalsdaten und der Vielzahl von Gewichtungswerten.

7. Computerimplementiertes Verfahren nach einem der vorhergehenden Ansprüche, wobei die erste Codiererkomponente so konfiguriert ist, dass sie eine zweidimensionale (2D) Faltung durchführt, während die zweite Codiererkomponente so konfiguriert ist, dass sie eine dreidimensionale (3D) Faltung durchführt.

8. Computerimplementiertes Verfahren nach einem der vorhergehenden Ansprüche, ferner umfassend:
Feststellen von Orientierungspunktdaten unter Verwendung der ersten Bilddaten, die eine Vielzahl von Gesichtsorientierungspunkten angeben, die dem ersten Benutzer zugeordnet sind,
wobei die Bildmerkmalsdaten unter Verwendung der ersten Bilddaten, der Zwischenmerkmalsdaten und der Orientierungspunktdaten erzeugt werden.

9. Computerimplementiertes Verfahren nach Anspruch 1 oder 2, das ferner vor dem Empfangen der zweiten Audiodaten umfasst:
Empfangen fünfter Audiodaten, die eine von einem zweiten Benutzer erzeugte zweite Sprache darstellen;
Empfangen zweiter Bilddaten, die mindestens ein erstes Bild des zweiten Benutzers darstellen;
Feststellen, dass ein dem zweiten Benutzer zugeordneter Lippenabschnitt in einem ersten Bereich des ersten Bildes dargestellt ist; und
Erzeugen, unter Verwendung der zweiten Bilddaten, dritter Bilddaten, die mindestens ein zweites Bild des zweiten Benutzers darstellen, wobei einem Abschnitt des zweiten Bildes, der dem ersten Bereich entspricht, Rauschen hinzugefügt wird,
wobei das trainierte Modell unter Verwendung der fünften Audiodaten, der dritten Bilddaten und der zweiten Bilddaten trainiert wird.

10. System, umfassend:
mindestens einen Prozessor; und
Speicher, der Befehle enthält, die von dem mindestens einen Prozessor ausgeführt werden können, um das System zu Folgendem zu veranlassen:
Erzeugen eines ersten Audiosignals unter Verwendung eines Lautsprechers und erster Audiodaten;
Erzeugen zweiter Audiodaten unter Verwendung mindestens eines Mikrofons eines Geräts, wobei die zweiten Audiodaten dem von dem mindestens einen Mikrofon erfassten Audiosignal entsprechen und wobei die zweiten Audiodaten das erste Audiosignal und die von einem ersten Benutzer erzeugte erste Sprache darstellen;
Empfangen der zweiten Audiodaten durch das Gerät;
Empfangen erster Bilddaten, die den ersten Benutzer darstellen;
Durchführen einer Echokompensation unter Verwendung der zweiten Audiodaten und der ersten Audiodaten, um dritte Audiodaten und Echoschätzungsdaten zu erzeugen;
Erzeugen erster komplexer Spektrogrammdaten unter Verwendung der dritten Audiodaten und der Echoschätzungsdaten, die den zweiten Audiodaten entsprechen; und
Erzeugen von vierten Audiodaten, die die erste Sprache darstellen, durch ein trainiertes tiefes neuronales Netzwerk-Sprachverbesserungsmodell, das zum Durchführen einer Rauschverminderung konfiguriert ist und die ersten Bilddaten sowie die ersten komplexen Spektrogrammdaten verwendet, wobei das Erzeugen der vierten Audiodaten ferner umfasst:
Erzeugen von Bildmerkmalsdaten unter Verwendung einer ersten Codiererkomponente und der ersten Bilddaten,
Erzeugen von Audiomerkmalsdaten unter Verwendung einer zweiten Codiererkomponente, der ersten komplexen Spektrogrammdaten und von der ersten Codiererkomponente empfangener Zwischenmerkmalsdaten,
Erzeugen von ersten Daten unter Verwendung der Audiomerkmalsdaten und der Bildmerkmalsdaten, und
Erzeugen der vierten Audiodaten unter Verwendung einer ersten Decodiererkomponente und der ersten Daten;
wobei der Speicher ferner Befehle umfasst, die, wenn sie von dem mindestens einen Prozessor ausgeführt werden, das System ferner veranlassen, unter Verwendung der vierten Audiodaten und der Echoschätzungsdaten eine Rest-Echokompensation durchzuführen, um verarbeitete Daten zu erzeugen.

11. System nach Anspruch 10, wobei der Speicher ferner Befehle umfasst, die, wenn sie von dem mindestens einen Prozessor ausgeführt werden, das System ferner zu Folgendem veranlassen:
Erzeugen von Sprachmaskendaten unter Verwendung der ersten Decodiererkomponente und der ersten Daten; und
Erzeugen der vierten Audiodaten unter Verwendung der Sprachmaskendaten und der ersten komplexen Spektrogrammdaten.

12. System nach Anspruch 10 oder 11, wobei der Speicher ferner Befehle umfasst, die, wenn sie von dem mindestens einen Prozessor ausgeführt werden, das System ferner zu Folgendem veranlassen:
Erzeugen von zweiten Bilddaten, die den ersten Benutzer darstellen, unter Verwendung einer zweiten Decodiererkomponente und der ersten Daten.

13. System nach Anspruch 10 oder 11, wobei der Speicher ferner Befehle umfasst, die, wenn sie von dem mindestens einen Prozessor ausgeführt werden, das System ferner zu Folgendem veranlassen:
Feststellen, dass in einem Abschnitt der ersten Bilddaten zwei Gesichter dargestellt sind; und
Erzeugen von fünften Audiodaten, die eine von einem zweiten Benutzer erzeugte zweite Sprache darstellen, unter Verwendung einer zweiten Decodiererkomponente und eines Abschnitts der ersten Daten, der dem Abschnitt der ersten Bilddaten entspricht.

14. System nach Anspruch 13, wobei der Speicher ferner Befehle umfasst, die, wenn sie von dem mindestens einen Prozessor ausgeführt werden, das System ferner zu Folgendem veranlassen:
Erzeugen, unter Verwendung der zweiten Decodiererkomponente und des Abschnitts der ersten Daten, sechster Audiodaten, die die erste Sprache darstellen.

## Revendications

1. Procédé mis en œuvre par ordinateur, le procédé comprenant :
la génération d'un premier signal audio à l'aide d'un haut-parleur et de premières données audio ;
la génération de deuxièmes données audio à l'aide d'au moins un microphone d'un dispositif, les deuxièmes données audio correspondant au signal audio capté par l'au moins un microphone, dans lesquelles les deuxièmes données audio représentent le premier signal audio et une première parole générée par un premier utilisateur;
la réception, par le dispositif, des deuxièmes données audio ;
la réception de premières données d'image représentant le premier utilisateur;
la réalisation, à l'aide des deuxièmes données audio et des premières données audio, d'une annulation d'écho pour générer des troisièmes données audio et des données d'estimation d'écho ;
la génération, à l'aide des troisièmes données audio et des données d'estimation d'écho, de premières données de spectrogramme complexe correspondant aux deuxièmes données audio ; et
la génération, à l'aide d'un modèle d'amélioration de parole de réseau de neurones profond entraîné qui est configuré pour effectuer une réduction du bruit et qui utilise les premières données d'image et les premières données de spectrogramme complexe, de quatrièmes données audio représentant la première parole, dans laquelle la génération des quatrièmes données audio comprend en outre :
la génération de données de caractéristiques audio à l'aide d'un premier composant codeur et des premières données de spectrogramme complexe,
la génération de données de caractéristiques d'image à l'aide d'un second composant codeur, des premières données d'image et de données de caractéristiques intermédiaires reçues du premier composant codeur,
la génération, à l'aide des données de caractéristiques audio et des données de caractéristiques d'image, de premières données, et
la génération, à l'aide d'un premier composant décodeur et des premières données, des quatrièmes données audio ;
dans lequel le procédé comprend en outre la réalisation, à l'aide des quatrièmes données audio et des données d'estimation d'écho, d'une annulation d'écho résiduel afin de générer des données traitées.

2. Procédé mis en œuvre par ordinateur de la revendication 1, dans lequel la génération des quatrièmes données audio comprend en outre :
la génération, à l'aide du premier composant décodeur et des premières données, de données de masque de parole ; et
la génération, à l'aide des données de masque de parole et des premières données de spectrogramme complexe, des quatrièmes données audio.

3. Procédé mis en œuvre par ordinateur de la revendication 1 ou 2, comprenant en outre :
la génération, à l'aide d'un second composant décodeur et des premières données, de deuxièmes données d'image représentant le premier utilisateur.

4. Procédé mis en œuvre par ordinateur de la revendication 1 ou 2, comprenant en outre :
la détermination que deux visages sont représentés dans une partie des premières données d'image ; et
la génération, à l'aide d'un second composant décodeur et d'une partie des premières données correspondant à la partie des premières données d'image, de cinquièmes données audio représentant une seconde parole générée par un second utilisateur.

5. Procédé mis en œuvre par ordinateur de la revendication 4, comprenant en outre :
la génération, à l'aide du second composant décodeur et de la partie des premières données, de sixièmes données audio représentant la première parole.

6. Procédé mis en œuvre par ordinateur de l'une quelconque des revendications précédentes, dans lequel la génération des premières données comprend en outre :
la génération de premières données de caractéristiques par combinaison des données de caractéristiques audio et des données de caractéristiques d'image ;
la génération, à l'aide des premières données de caractéristiques, d'une pluralité de valeurs de poids ; et
la génération des premières données à l'aide des données de caractéristiques audio et de la pluralité de valeurs de poids.

7. Procédé mis en œuvre par ordinateur de l'une quelconque des revendications précédentes, dans lequel le premier composant codeur est configuré pour effectuer une convolution bidimensionnelle (2D), tandis que le second composant codeur est configuré pour effectuer une convolution tridimensionnelle (3D).

8. Procédé mis en œuvre par ordinateur de l'une quelconque des revendications précédentes, comprenant en outre :
la détermination, à l'aide des premières données d'image, de données de repères indiquant une pluralité de repères faciaux associés au premier utilisateur,
dans lequel les données de caractéristiques d'image sont générées à l'aide des premières données d'image, des données de caractéristiques intermédiaires et des données de repères.

9. Procédé mis en œuvre par ordinateur de la revendication 1 ou 2, comprenant en outre, avant la réception des deuxièmes données audio :
la réception de cinquièmes données audio représentant une seconde parole générée par un second utilisateur;
la réception de deuxièmes données d'image représentant au moins une première image du second utilisateur;
la détermination qu'une partie des lèvres associée au second utilisateur est représentée dans une première région de la première image ; et
la génération, à l'aide des deuxièmes données d'image, de troisièmes données d'image représentant au moins une seconde image du second utilisateur, dans lequel du bruit est ajouté à une partie de la seconde image correspondant à la première région,
dans lequel le modèle entraîné est entraîné à l'aide des cinquièmes données audio, des troisièmes données d'image et des deuxièmes données d'image.

10. Système, comprenant :
au moins un processeur ; et
une mémoire comprenant des instructions exploitables pour être exécutées par l'au moins un processeur pour amener le système à :
générer un premier signal audio à l'aide d'un haut-parleur et de premières données audio ;
générer des deuxièmes données audio à l'aide d'au moins un microphone d'un dispositif, les deuxièmes données audio correspondant au signal audio capté par l'au moins un microphone, dans lesquelles les deuxièmes données audio représentent le premier signal audio et la première parole générée par un premier utilisateur;
recevoir, par le dispositif, les deuxièmes données audio ;
recevoir des premières données d'image représentant le premier utilisateur;
effectuer, à l'aide des deuxièmes données audio et des premières données audio, une annulation d'écho pour générer des troisièmes données audio et des données d'estimation d'écho ;
générer, à l'aide des troisièmes données audio et des données d'estimation d'écho, des premières données de spectrogramme complexe correspondant aux deuxièmes données audio ; et
générer, à l'aide d'un modèle d'amélioration de parole de réseau de neurones profond entraîné qui est configuré pour effectuer une réduction du bruit et qui utilise les premières données d'image et les premières données de spectrogramme complexe, des quatrièmes données audio représentant la première parole, dans laquelle la génération des quatrièmes données audio comprend en outre :
la génération de données de caractéristiques d'image à l'aide d'un premier composant codeur et des premières données d'image,
la génération de données de caractéristiques audio à l'aide d'un second composant codeur, des premières données de spectrogramme complexe, et des données de caractéristiques intermédiaires reçues du premier composant codeur,
la génération, à l'aide des données de caractéristiques audio et des données de caractéristiques d'image, de premières données, et
la génération, à l'aide d'un premier composant décodeur et des premières données, des quatrièmes données audio ;
dans lequel la mémoire comprend en outre des instructions qui, lorsqu'elles sont exécutées par l'au moins un processeur, amènent en outre le système à effectuer, à l'aide des quatrièmes données audio et des données d'estimation d'écho, une annulation d'écho résiduel afin de générer des données traitées.

11. Système de la revendication 10, dans lequel la mémoire comprend en outre des instructions qui, lorsqu'elles sont exécutées par l'au moins un processeur, amènent en outre le système à :
générer, à l'aide du premier composant décodeur et des premières données, des données de masque de parole ; et
générer, à l'aide des données de masque de parole et des premières données de spectrogramme complexe, les quatrièmes données audio.

12. Système de la revendication 10 ou 11, dans lequel la mémoire comprend en outre des instructions qui, lorsqu'elles sont exécutées par l'au moins un processeur, amènent en outre le système à :
générer, à l'aide d'un second composant décodeur et des premières données, des deuxièmes données d'image représentant le premier utilisateur.

13. Système de la revendication 10 ou 11, dans lequel la mémoire comprend en outre des instructions qui, lorsqu'elles sont exécutées par l'au moins un processeur, amènent en outre le système à :
déterminer que deux visages sont représentés dans une partie des premières données d'image ; et
générer, à l'aide d'un second composant décodeur et d'une partie des premières données correspondant à la partie des premières données d'image, des cinquièmes données audio représentant une seconde parole générée par un second utilisateur.

14. Système de la revendication 13, dans lequel la mémoire comprend en outre des instructions qui, lorsqu'elles sont exécutées par l'au moins un processeur, amènent en outre le système à :
générer, à l'aide du second composant décodeur et de la partie des premières données, des sixièmes données audio représentant la première parole.
